# EUROPEAN PATENT SPECIFICATION

(11) **EP 0 438 784 B1**
(45) Date of publication and mention of the grant of the patent: **07.02.1996**
(21) Application number: 90125525.7
(22) Date of filing: 27.12.1990
(51) Int. Cl.: G11B 20/14, G11B 20/10, G11B 7/00

(54) **Apparatus for generating clock signals for data reproduction**
Einrichtung zur Erzeugung von Taktsignalen für Datenwiedergabe
Appareil pour générer des signaux d'horloge pour la reproduction des données

(30) Priority: 27.12.1989 JP 336529/89; 29.05.1990 JP 56331/90 U; 12.07.1990 JP 184594/90
(43) Date of publication of application: 31.07.1991
(73) Proprietor: SONY CORPORATION, Tokyo (JP)
(72) Inventor: Senshu, Susumu, Shinagawa-ku, Tokyo (JP); Kawashima, Tetsuji, Shinagawa-ku, Tokyo (JP)
(74) Representative: Schmidt-Evers, Jürgen, Dipl.-Ing.

(56) References cited:
- EP-A- 0 219 037
- EP-A- 0 320 975
- DE-A- 3 435 764
- DE-A- 3 622 239
- DE-A- 3 809 223
- US-E- 32 945

## Description

### Background of the Invention

### Field of the Invention

This invention relates to an apparatus for generating data-reproducing clock signals, and a data reproducing apparatus. More particularly, it relates to an apparatus for generating data-reproducing clock signals in which outside clock signals are generated by using reference clock signals recorded on the recording medium, and a data reproducing apparatus in which data are reproduced by using outside clock signals.

### Prior Art

With the magnetic field modulation magneto-optical recording system, those portions on the disc which have reached the Curie temperature by laser irradiation are magnetized in the orientation of the externally applied magnetic field for performing data recording. That is, a laser diode, for example, is driven by pulses to emit light, the external magnetic field is modulated by record data and pits are formed time divisionally on the recording surface by way of performing data recording. The pits are associated with the spot size of the laser beam and represent the portion of the disc magnetized by the outside magnetic field. If, for raising the recording density, the interval of the pulses for driving the laser light source is selected to be smaller than the spot size of the laser beam, a portion of the laser beam spot is overlapped with a portion of the previously formed pit, so that the newly formed pit is overwritten on a portion of the previously formed pit. That is, each pit is formed time-divisionally and an overlapping is produced if the recording density is to be raised. The result is the so-called edge recording in which data are carried by transition points or edges of the orientation of magnetization, such as in the case of the NRZI (non-return-to-zero-inverted) system.

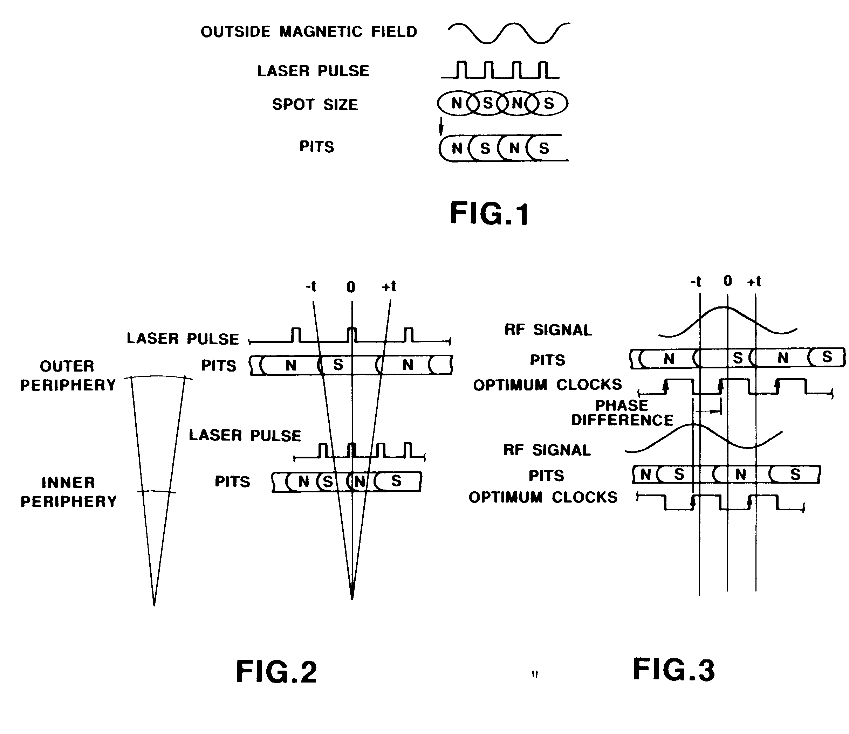

On the other hand, a magneto-optical recording system, such as a magneto-optical disc, is rotationally driven by a spindle motor at a constant linear velocity (CLV) or at a constant angular velocity (CAV) for forming the pits as a spiral pit row or concentric pit rows. Meanwhile, with CAV driving, the distance or length traversed by the recording head during a unit time interval is lesser on the inner periphery than on the outer periphery, so that, as shown in Fig. 2, the amount of overlapping on the inner periphery becomes large than that on the outer periphery. If data are reproduced from the pits recorded in this manner, the signals reproduced from the pits on the inner periphery are temporally advanced or shifted relative to those reproduced from the pits on the outer periphery, as shown in Fig. 3. If, with the so-called outside clocking system not employing self-clocking, the pits on the inner periphery are reproduced by using the same clock signals as the outside clock signals, that is the synchronizing clock signals from the magneto-optical disc for reproducing the pits on the outer periphery, the above-mentioned transition points or edge cannot be located correctly. In other words, the detection window becomes narrower and, if the so-called NRZI modulation system is used for modulating the outside magnetic field, the noise margin relative to the threshold value for checking if there is or there is not an edge during reproduction is reduced.

For overcoming these deficiencies, corrections may be made during recording on the basis of radius data or ambient environments, such as temperature or power of the laser light source, before proceeding to the pit forming operation. However, it is difficult to find detailed recording conditions for making such correction. Besides, since the disc properties differ from one disc to another, and the properties of the data recording apparatus also differ from those of the data reproducing apparatus, it is not sufficient to make the corrections at the time of recording. Thus, for realizing a high recording density, it become necessary to correct the phase, for example, of the outside clock signals on the basis of the waveform of the signals reproduced at the time of data reproduction.

While there is known a so-called self-clocking system in which clock signals superimposed on data signals recorded on a magneto-optical disc are extracted during reproduction and used as reproducing clock signals, it is necessary with this system to use a dedicated modulation system and to provide a sufficient clock capturing region to enable a correct clock extraction.

DE-A- 38 09 223 relates to an optical recording and reproducing apparatus in which a clock signal derived from preformed pits on the recording medium. This clock signal is subjected to delays in order to generate clocks of the same frequency but with different phases. A selector selects the clock having the most suitable phase in order to compensate for a phase shift of the preformed pits relative to the data recorded on the medium. This selection is done on the basis of a phase detector output which causes a counter to increment/decrement depending on the phase relationship of the currently selected delayed clock with respect to the data signal. The counter value in turn controls the selection of the clocks. US-E- 32 945 is similar, except that the selection of the delayed clock is controlled on the basis of an integration value of the data signal.

### Object and Summary of the Invention

It is therefore a primary object of the present invention to provide an apparatus for generating clock signals for data reproduction in which outside clock signals may be produced which will prevent data errors from occurring as a result of phase deviations of the reproduced waveform at the inner and outer disc peripheries at the time of reproduction of, for example, a magneto-optical disc, above all, a high recording density magneto-optical disc, driven at a constant angular velocity (CAV), with the use of the outside clocking system.

It is another object of the present invention to provide an apparatus for generating clock signals for data reproduction in which the modulation system may be selected freely and which is not affected by differences in the properties of the recording medium, ambient recording conditions or the properties of the data recording apparatus and the data reproducing apparatus.

It is a further object of the present invention to provide a data reproducing apparatus in which the outside clock signals from the above mentioned apparatus for generating clock signals for data reproduction are used for reproducing the data.

It is a further object of the present invention to provide a data reproducing apparatus which is not affected by the differences in disc properties or in the properties of the data recording apparatus and the data reproducing apparatus or ambient recording conditions.

According to the present invention, there is provided an apparatus comprising the features of claim 1 and a method comprising the features of claim 10.

With the apparatus for generating clock signals for data reproduction according to the present invention, the reproduced signals of the reference clock signals recorded on the recording medium are sampled with outside clock signals with respective different phases, and the outside clock signals having the phases which will give the maximum differences in the sampling values are selected for generating the outside clock signals suited for data reproduction.

With the data reproducing apparatus of the present invention, the difference if sampling values obtained upon sampling the reproduced data signals by using the outside clock signals from the above mentioned apparatus for generating data-reproducing clock signals is compared to a value equal to about one-half of the difference in the maximum sampling values obtained upon sampling the reproduced signals of the reference clock signals, for thereby reproducing the data.

### Brief Description of the Drawings

Fig. 1 is a diagrammatic view for illustrating the recording principle for a magneto-optical recording medium.

Fig. 2 is a diagrammatic view showing pits formed on a magneto-optical disc of a CAV driving system.

Fig. 3 is a diagrammatic view showing the pits of Fig. 2 expressed on the time axis.

Fig. 4 is a block circuit diagram showing a data recording/reproducing apparatus employing an apparatus for generating data-reproducing clock signals according to the present invention.

Fig. 5 is a diagrammatic view of a data recording/reproducing apparatus employing an apparatus for generating data-reproducing clock signals according to the present invention.

Fig. 6 is a chart showing the relation between the reference clock signals, a constant level signal and outside clock signals in the data recording/reproducing apparatus shown in Fig. 5.

Fig. 7 is a block diagram showing a typical arrangement of a selector for outside clock signals in the data recording/reproducing apparatus shown in Fig. 5.

Figs. 8A-8Z are timing charts for illustrating the operation of the selector shown in Fig. 7.

Fig. 9 is a block circuit diagram showing a modified embodiment of the apparatus for generating data-reproducing clock signals according to the present invention.

Fig. 10 is a block circuit diagram showing a typical arrangement of the selector in the apparatus shown in Fig. 9.

Figs. 11A-11Y are timing charts for illustrating the operation of the selector shown in Fig. 10.

Fig. 12 is a block circuit diagram showing a modified arrangement of the selector in the apparatus shown in Fig. 9.

Fig. 13 is a block circuit diagram showing another modified embodiment of the apparatus for generating data-reproducing clock signals according to the present invention.

Fig. 14 is a flow chart for illustrating the operation of the apparatus shown in Fig. 13.

Figs. 15A-I and 16A-I are timing charts for illustrating the operation of the apparatus shown in Fig. 13.

Figs. 17 is a block circuit diagram showing a further modified embodiment of the apparatus for generating data-reproducing clock signals according to the present invention.

Fig. 18 is a flow chart for illustrating the operation of the apparatus shown in Fig. 17.

Fig. 19 is a chart for illustrating the operation of the apparatus shown in Fig. 17.

Fig. 20 is a block circuit diagram showing an example of an optimum phase detection circuit employed in an apparatus for generating data-reproducing clock signals according to the present invention.

Fig. 21 is a flow chart for illustrating the operation of the optimum phase detection circuit shown in Fig. 20.

### Detailed Description of Preferred Embodiments

By referring to the drawings, certain preferred embodiments of the present invention will be explained in detail.

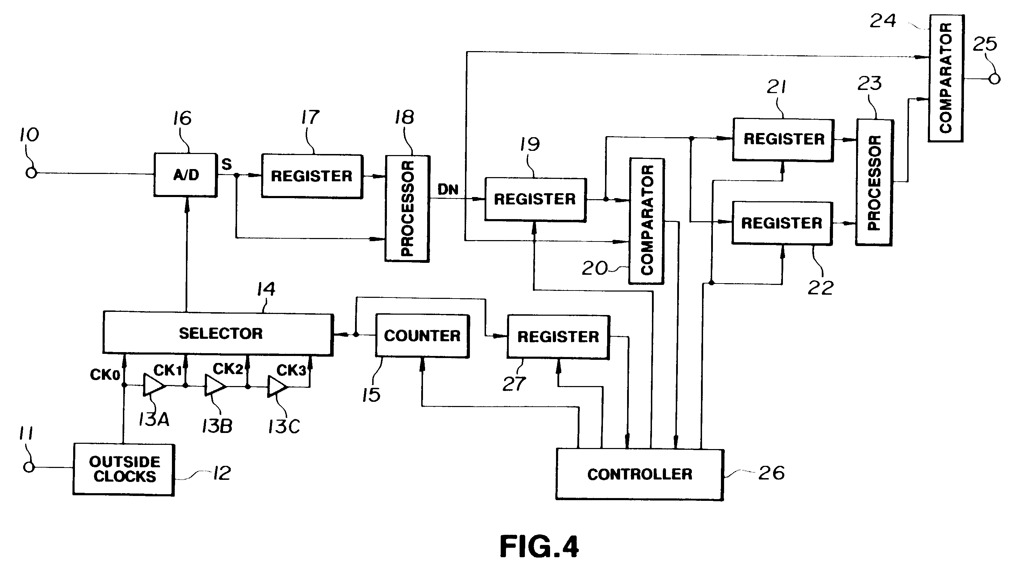

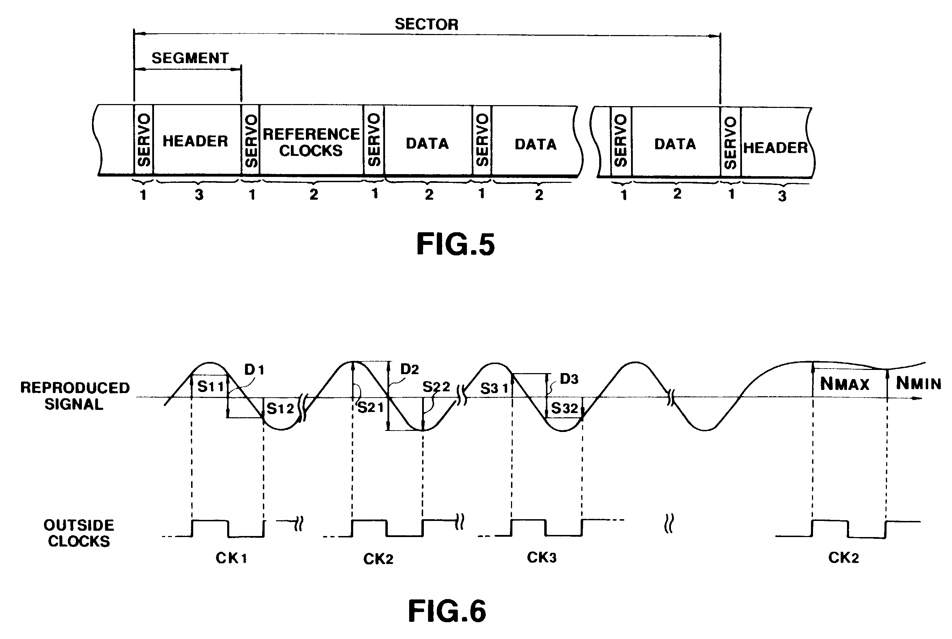

Fig. 4 is a block circuit diagram of a recording/reproducing apparatus employing an apparatus for data-reproducing clock signals according to the present invention, and Fig. 5 shows an example of a recording format for a magneto-optical disc employed in the data recording/reproducing apparatus.

The recording format for the magneto-optical disc is hereinafter explained.

Referring to Fig. 5, a sector or segment as a data recording unit is made upon of a predetermined number of segments or frames. Each segment is constituted by a servo region 1 and a data region 2. However, at the leading segment of each sector, a header region 3, in which addresses or the like data are recorded, is formed in the data region 2. In each servo region, a pair of so-called wobbling pits for producing the so-called tracking error signal and clock pits for clock synchronization, are previously formed by embossing. In the data region 2, data are recorded or reproduced under photomagnetic effects. For overcoming the above mentioned problem caused by phase deviations of the reproduced data signals on the inner and outer peripheries of the magnetic-optical disc, reference clock signals and a constant level signal are recorded in, for example, the data region 2 of the second segment at the time of data recording. That is, as shown for example in Fig. 3, the reference clock signals are recorded in the former half of the data region 2 of the second segment so that the amplitude and the frequency of the signals reproduced from the data region 2 of the second segment will be equal to the maximum frequency of the reproduced data signals. In the remaining portion of the data region 2 of the second segment, there is recorded a signal which, when reproduced, will be at a constant level.

For reproducing the recording medium having the above mentioned recording format, such as the magneto-optical disc, sync clock signals, referred to herein as outside or external clock signals, are used as clock signals for data reproduction. According to the present invention, these reference clock signals are used for phase correction of the outside clock signals, as will be explained subsequently. Thus, in the present embodiment, the magneto-optical disc having the above mentioned recording format is used as the recording medium on which the reference clock signals are recorded.

The apparatus for generating clock signals for data reproduction is hereinafter explained.

Referring to Fig. 4, the RF (high frequency) signals reproduced from a magneto-optical disc rotationally driven at a constant angular velocity (CAV) by a spindle motor, are supplied to a terminal 10 as reproduced signals, that is, MO signals, by means of an amplifier, an equalizer and so forth. Signals obtained by reproducing clock pits in the servo region 1 of the magneto-optical disc are supplied to a terminal 11.

An outside clock reproducing circuit 12 is constituted by, for example, a PLL, and the outside clock signal CK₀ is formed from signals reproduced from the clock pits. The outside clock signals CK₀ are delayed at, for example, three series-connected delay circuit 13A, 13B and 13C. In this manner, outside clock forming, means for forming plural outside clock signals CK₀, CK₁, CK₂ and CK₃ having respectively different phases are constituted by the outside clock regenerating circuit 12 and the delay circuit 13A, 13B and 13C.

A selector 14 is responsive to a control signal from a counter 15 to select one of the outside clock signals CK₀ to CK₃ sequentially to transmit the selected outside clock signal to an A/D converter 16. The above mentioned reproduced signals are supplied to the A/D converter 16 by means of the terminal 10. Using the outside clock signal CK₀ from the selector 14, the A/D converter 16 samples the reproduced signals of the reference clock signals, as shown in Fig. 6, to convert the sampling values into digital sampling values S. These sampling values S are supplied to a register 17 and a processing circuit 18. Thus, in the present embodiment, the A/D converter 16 is used as sampling means for sampling the reproduced signals of the reference clock signals by using the outside clock signals CK₀ to CK₃.

The register 17 delays the sampling value S by one sampling period and supplies the delayed sampling value S to the processing circuit 18. The processing circuit 18 calculates the absolute value D_{N} of a difference of sampling values S_{N} associated with the outside clock signals CK₀ to CK₃, where N represents the numbers of the outside clock signals. For example, as shown in Fig. 6, the absolute values D_{N} of the differences of the sampled values S_{N} associated with the outside clock signals CK₀ to CK₃, may be found from the formula${\text{D}}_{\text{N}} {\text{= |S}}_{\text{N1}} {\text{- S}}_{\text{N2}} \text{|}$ where N indicates the numbers of the outside clock signals. The absolute value D_{N} of the differences of the sampling values associated with the outside clock signals CK₀ to CK₃ are supplied to a register 19 and a comparator 20. The register 19 delays the absolute value D_{N} of the difference of the sampling values by, for example, one sampling period, and transmits the absolute value D_{N} of the difference of the delayed sampling values to the comparator 20. The comparator 20 compares the absolute value D_{N} of the difference of the delayed sampling value with the absolute value D_{N} of the difference of the current sampling values from the processing circuit 18 to supply the result of comparison to a controller 26. When the absolute value D₂ of the difference of the current sampled value is larger than the absolute value D₁ of the difference of the delayed sampling value, as shown in Fig. 6, the controller 26 controls the register 21 to store the absolute value D₂ of the difference of the current sampling values in register 19. That is, the maximum one of the absolute values D_{N} of the difference of the sampling values of the reproduced signals of the reference clock signals recorded on the magneto-optical disc by the outside clock signals CK₀ to CK₃ is stored in register 19.

On the other hand, the register 27 receives the control signal from the counter 15 controlling the selector 14 to store the most recent control signal whenever the register 19 is updated to the larger value. that is, the control signal that prevails when the outside clock signal for which the absolute value D_{N} of the difference of the sampling values of the reproduced signals of the reference clock signals becomes maximum is ultimately stored in the register 27.

The controller 26 receives this control signal stored in register 27 and controls the counter 15 to select and output the above mentioned outside clock signal at the selector 14 as the outside clock signal for data reproduction as will be explained later. In the specific example, shown in Fig. 6, the outside clock signal CK₂ is outputted, since it is determined to be the clock signal for data reproduction. The controller 26 also operates to store the maximum value of the differences of the sampled values, that is, (S_{MAX} - S_{MIN}), stored in the register 19. Thus, in the present embodiment, the maximum value detection means for detecting the maximum value (S_{MAX} - S_{MIN}) of the differences of the sampling values associated with the outside clock signals CK₀ to CK₃ is constituted by the selector 14, counter 15, registers 17, 19, processing circuit 18, comparator 20 and the controller 26, while the outside clock signal selection means for selecting and outputting the outside clock signal from the outside clock signal forming means, which is associated with the maximum value (S_{MAX} - S_{MIN}) detected by the maximum value detection means, is constituted by the above selector 14, counter 15, controller 26 and the register 27.

In this manner, by correcting the phases of the outside clock signals on the basis of the reproduced signals of the reference clock signals actually recorded on the magneto-optical disc, it becomes possible with the apparatus for generating data-reproducing clock signals of the present invention to produce the data-reproducing clock signals whereby data reproduction may be performed without being influenced by the difference in the pit density between the outer and inner peripheries of the magneto-optical disc, ambient conditions during recording, difference in properties between the recording apparatus and the reproducing apparatus, or the difference in disc properties. By using the reference clock signals or repetitive patterns, code-to-code interferences between patterns may be more uniform while shifting of the outside clock signals may be precluded. Even if the region in which the reference clock signals are recorded is partially defective and the signal level of the reproduced signal in the defective portions is lowered, the maximum difference of the sampling values may be detected correctly by repeating the operation of detecting the maximum difference of the sampling values several times. In other words, disc defects need not be detected in the segment where the reference clock signals are recorded, while the data reproduction is not affected by these defects.

The operation of the data reproducing apparatus is hereinafter explained.

The constant level signal following the reference clock signals of the data region 2 of the above mentioned second segment is reproduced by using the outside clock signal having its phase corrected with the use of the reference clock signals recorded in the data region 2 of the second segment shown in Fig. 5, that is, by using the outside clock signal for which the difference of the sampling values has been determined to be maximum at the comparator 20 and which has accordingly been selected at the selector 14. The maximum amplitude of the noise is then found from this reproduced signal by using a procedure similar to that used when finding the maximum difference of the sampled values of the reproduced signals of the above mentioned reference clock signals.

More specifically, as shown for example in Fig. 6, the controller 26 samples the reproduced signal of the constant level signal by using the outside clock signal CK₂ which will give the maximum difference of the sampled values of the reproduced signal of the reference clock signals, and stores the maximum value of the difference of these sampled values in a register 22. Thus the maximum amplitude (N_{MAX} - N_{MIN}) of the noise which prevails when the constant level signal following the reference clock signals is stored in register 22. The controller 26 stores the maximum amplitude (N_{MAX} - N_{MIN}) of the noise in register 22.

A processing circuit 23 calculates, from the maximum amplitude (S_{MAX} - S_{MIN}) of the reproduced signal of the reference clock signal from register 21 and the maximum amplitude (N_{MAX} - N_{MIN}) of the noise from register 22, a threshold value TH used for checking if there is or there is not an edge necessary for reproducing data recorded in accordance with, for example, the so-called NRZI modulation system, and transmits the threshold value TH to a comparator 24. More specifically, the threshold value TH used for edge detection is found from the formula${\text{TH = (|S}}_{\text{MAX}} {\text{- S}}_{\text{MIN}} {\text{| - |N}}_{\text{MAX}} {\text{- N}}_{\text{MIN}} \text{|)/2}$ and transmitted to a comparator 24.

The comparator 24 then compares the differences between the threshold value TH and the sampling values of the reproduced data signals which are recorded in the data region of the third and the following segments of the selector and which are transmitted from the processing circuit 18. For example, it is determined that there is an edge when the difference of the sampling values of the reproduced data signal is larger than the threshold value TH and that there is not an edge when the difference is lesser than the threshold value TH. The signal indicating if there is or there is not the edge is taken out by means of a terminal 27.

Thus, in the present embodiment, outside clock signal forming means for forming plural outside clock signals CK₀ to CK₃ having respective different phases is constituted by the above mentioned outside clock reproducing circuit 12 and delay circuits 13A, 13B and 13C, while the A/D converter 16 is used as sampling means for sampling the reproduced signals from the recording medium by the outside clock signals CK₀ to CK₃ formed by the outside clock signal forming means. Processing means for calculating the difference of the sampling values of the reproduced signals from the A/D converter 16 is constituted by the register 17 and the processing circuit 18. Maximum value detection means for detecting the maximum value of the differences of the sampling values, associated with the outside clock signals CK₀ to CK₃, of the reproduced signals of the reference clock signals, on the basis of the processing output from the processing means, is constituted by the register 19, comparator 20 and the controller 26 outside clock signal selecting means for selecting and outputting the outside clock signal from the outside clock signal forming means associated with the maximum value detected by the maximum value detection means is constituted by the selector 14, counter 16, controller 26 and the register 27, while data reproducing means for comparing the difference of the sampling values of the reproduced signals from processing means employing the outside clock signals selected at the outside clock signal selecting means and a value about one half the maximum value from the maximum value detection means to each other is constituted by the registers 21, 22, processing circuit 23, comparator 24 and the controller 26.

In this manner, by using the outside clock signals, corrected in phase on the basis of the reproduced signals of the reference clock signals actually recorded on the disc, it becomes possible with the present data reproducing apparatus to perform edge detection, that is, data reproduction, without being influenced by pit density differences on the outer and the inner peripheries of the magneto-optical disc, ambient recording conditions, difference in properties of the disc recording apparatus and the disc reproducing apparatus, or differences in disc properties. Since the threshold values for edge detection are determined on the basis of the reproduced signals of the reference clock signals actually recorded on the disc, data reproduction may be performed without being influenced by the differences in properties between the data recording apparatus and the data reproducing apparatus or differences in disc properties. In addition, the maximum values of the noise obtained from the reproduced signal of the constant level signal recorded on the magneto-optical disc may be included in the threshold value for edge detection for further enhancing the noise margin.

It is to be noted that the present invention is not limited to the above described embodiment. For example, the frequency of the reference clock signals recorded on the magneto-optical disc may be any other frequency than the maximum data recording frequency.

Considering the case in which the outside clock signals cannot be reproduced by only one selector due to, for example, defective reference clock signals on the disc, the above mentioned operation of forming the outside clock signals using the reference clock signals of a plurality of selectors may be repeated several times.

The above mentioned threshold value TH employed for edge detection of the reproduced signals in accordance with, for example, the NRZI system, may be in the form of${\text{TH = |S}}_{\text{MAX}} {\text{- S}}_{\text{MIN}} \text{|/2}$

Although the phase-corrected outside clock signals are used for edge detection in the case of the above described embodiment, it may be directly checked from the reproduced signal if there is or there is not a mark in synchronism with the outside clock signals from the apparatus for producing data-reproducing clock signals in case data is reproduced from, for example, NRZ modulated reproduced signal without edge detection.

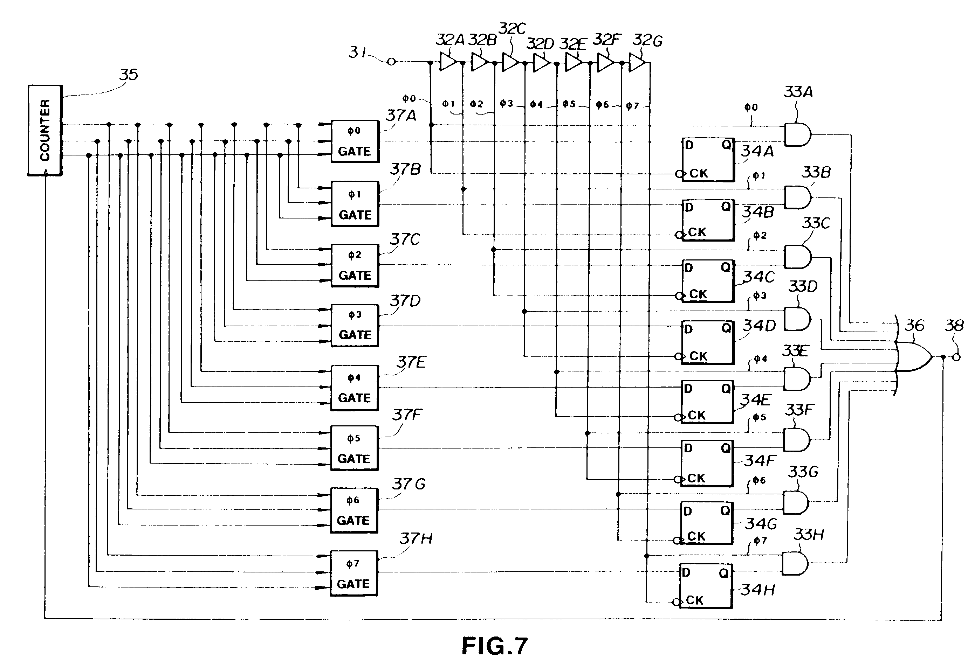

Meanwhile, with the above described data recording/reproducing apparatus, a counter-selector arrangement shown in Fig. 7 is generally employed for sequentially selecting a plurality of outside clocks having respective different phases. In Fig. 7, eight (8) kinds of clocks having respective different phases are employed.

Thus, in Fig. 7, outside clocks formed on the basis of the reproduced signals of the clock reproducing pits in the servo area are supplied to an input terminal 31. These outside clocks are delayed by delay circuits 32A to 32G connected in tandem.

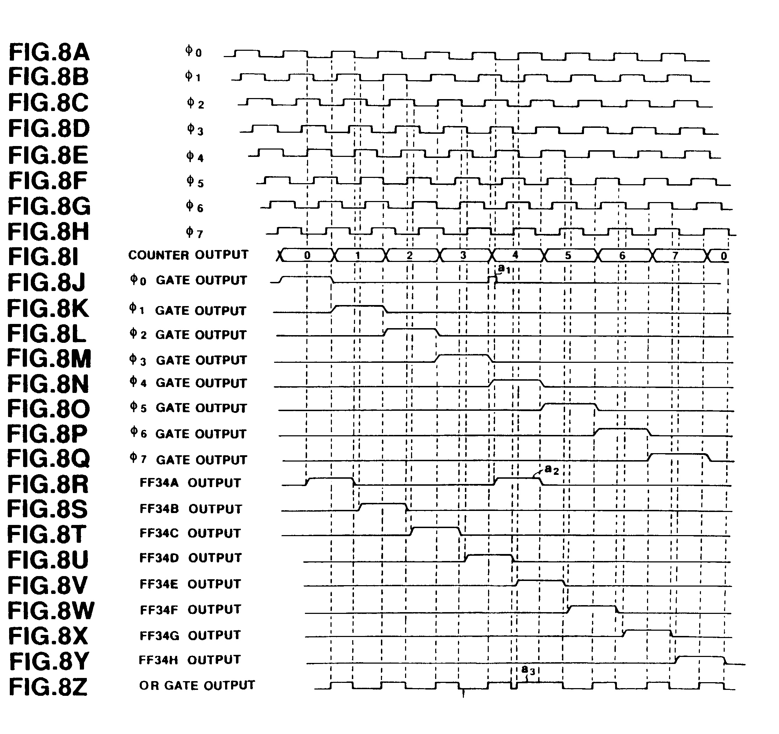

From the interstate points of the delay circuits 32A to 32G, eight (8) outside clocks φ₀ to φ₇ having respective different phases are taken out, as shown in Figs. 8 A to 8H. These outside clocks φ₀ to φ₇ are supplied to one inputs of AND gates 33A to 33H, while being inverted and supplied to clock inputs CK of D-flipflops 34A to 34H.

A selected one of the outside clocks is outputted at an OR gate 36 and an output terminal 38.

A counter 35 is incremented from "000" to "111", for example, by the output clock at output terminal 38, as shown in Fig. 8I. The count values of the counter 35 are supplied to gate circuits 37A to 37H.

The outputs from the gate circuits 37A to 37H are "1" when the inputs thereto are "000", "001", "010", "011", "100", "101", "110" and "111", respectively.

When the counter 35 has been incremented from "000" to "111", "1" is outputted sequentially from the gate circuits 37A to 37H, respectively, as shown in Figs. 8J to 8Q.

The outputs of the gate circuits 37A to 37H are supplied to data input terminals of the D-flipflops 34A to 34H, respectively.

With the falling of the eight outside clocks φ₀ to φ₇ having respective different phases, outputted from the interstate points of the delay circuits 32A to 32G, the outputs of the gate circuits 37A to 37A are fetched to the D-flipflops 34A to 34H. The outputs of the D-flipflops 34A to 34H are supplied to AND gates 33A to 33H, respectively.

The output of the D-flipflops 34A to 34H sequentially prove to be "1", as shown in Figs. 8R to 8Y.

However, mistaken operations may occasionally be produced by using the counter 35 for sequentially selecting these outside clocks having the respective different phases.

For example, when the counter 35 is incremented from "011" to "100", all of the three bits are changed. Since these three bits are not necessarily be changed with the same timing, the counter 35 may have any value during transition from "011" to "100". For example, the output of counter 35 may momentarily be "000" during transition from "011" to "100".

When the output of the counter 55 is momentarily "000" during transition from "011" to "100", a hazard is produced at gate circuit 37A, as shown at a₁ in Fig. 8J.

If the clock φ₁ (Fig. 8A) falls during the occurrence of the hazard a₁, D-flipflop 34A is set to "1" with the falling of the clock φ₁, as shown at d₂ in Fig. 8R.

Thus a superfluous pulse is outputted form OR gate 36, as shown at a₃ in Fig. 8Z.

It is therefore necessary to prevent such malfunction from occurring at the boundary of the count values.

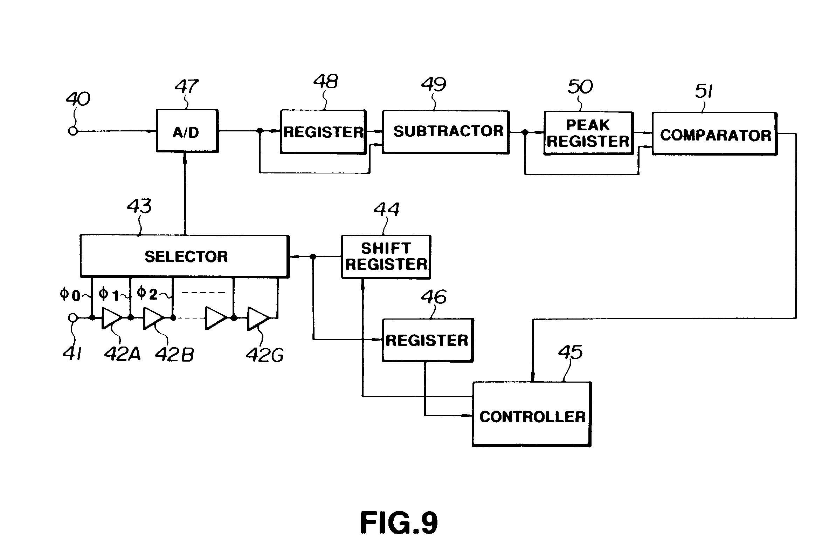

Referring to Fig. 9, outside clocks formed in PLL on the basis of the reproduced signal of the clock pit in the servo region are supplied to an input terminal 41.

These outside clocks are delayed by plural stage delay circuits 42A, 42B Outside clocks φ₀, φ₁, φ₂,... having respective different phases are taken out at interstate points of the delay circuits 42A, 42B These outside clocks φ₀, φ₁, φ₂ ... are supplied to a selector 43.

The selector 43 is set by the output of a shift register 44 which in turn is set on the basis of a control signal from a controller 45.

The outside clocks φ₀, φ₁, φ₂ ... are sequentially selected at the selector 43 on the basis of the output of the shift register 44. These outside clocks φ₀, φ₁, φ₂ ... are supplied to an A/D converter 47.

The reproduced RF signals from the disc are supplied to an input terminal 40, and thence supplied to A/D converter 47. As described previously, the reference clocks are recorded in the data region of the second segment, and the reproduced signals of these reference clocks are supplied to A/D converter 47 at the time of phase control of the outside clocks.

The output of the A/D converter 47 is supplied to a subtraction circuit 49 directly and after being delayed by one sample by means of as register 48. In the subtractor 49, the output of A/D converter 47 and the output of the A/D converter 47 after being delayed by one sample by means of the register 48 are subtracted one from the other, so that the difference values D₀, D₁, D2, ... of the sampling values are found sequentially, as described previously by referring to Fig. 6.

Since the reference clocks are set to, for example, the maximum repetition frequency, if the reference reproducing clocks are sampled by the outside clocks φ₀, φ₁, φ₂, φ₃, ..., the different of the adjacent sampling values becomes maximum when the phase relation between the reference clock and the outside clock is optimum.

The maximum value of the difference D₀, D₁, D₂, ... of the sampled values by the outside clocks φ₀, φ₁, φ₂, φ₃, ... are stored in a peak register 50.

The output of shift register 44 is accumulated in a register 46. If the value in peak register 50 is updated, the value in register 46 is updated correspondingly.

In this manner, the outside clock having the optimum phase is detected from the outside clocks φ₁, φ₂, φ₃, ... having different phases. Data are reproduced by using the outside clock having the optimum phase.

The control operation of sequentially selecting and outputting the outside clocks φ₁, φ₂, φ₃, ... is hereinafter explained in detail.

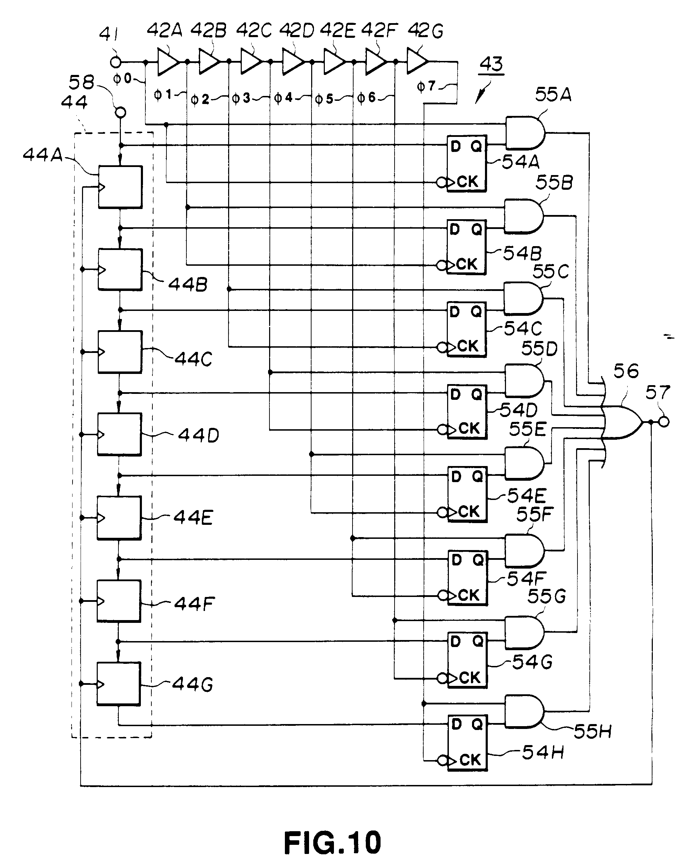

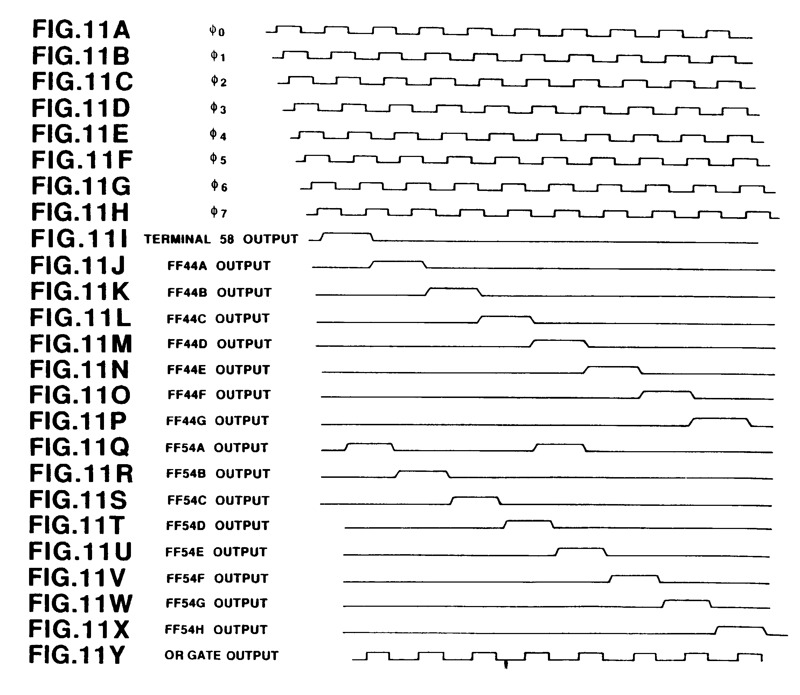

Referring to Fig. 10, the selector 43 for selecting the outside clocks φ₀, φ₁, φ₂, ... is constituted by D-flipflop 54A to 54H, AND gates 55A to 55H and OR gate 56. The outside clocks φ₀, φ₁, φ₂ ... (Figs. 11A to 11H) are supplied to one inputs of the AND gates 55A to 55H constituting the selector 43, while being inverted and supplied to clock input CK of D-flipflops 54A to 54H. The outputs of the D-flipflops 54A to 54H are supplied to the other inputs of the AND gates 55A to 55H, respectively. The outputs of the AND gates are supplied to OR gate 56.

The D-flipflops 44A to 44G constitute a shift register 44 for sequentially selecting the outside clocks φ₀, φ₁, φ₂, ...., This shift register 40 is actuated by clocks outputted from OR gate 56.

The outputs from the interstate points of the D-flipflops 44A to 44G are supplied to data input terminals D of the D-flipflops 54A to 54H constituting the selector 43.

For performing a phase control of the outside clocks, data "1" is supplied to a terminal 58. This data "1" is transmitted through D-flipflops 44A to 44G, as shown in Figs. 11I to 11P. Thus the D-flipflops 44A to 44G are sequentially se to "1".

With the falling of the outside clocks φ₀, φ₁, φ₂, ... outputted with different phases from the interstate points of the delay circuits 42A to 42G, the outputs from the interstate points of the D-flipflops 44A to 44G are fetched to the D-flipflops 54A to 54G.

The D-flipflops 54A to 54H are sequentially set to "1", as shown in Figs. 11I to 11P. With the D-flipflops 54A to 54H thus set to "1", the associated AND gates 55A to 55H are opened so that the outside clocks φ₀ to φ₇ are sequentially outputted via AND gates 55A to 55G and OR gate 56 at output terminal 57.

With the above described embodiment, the outside clocks φ₀, φ₁, φ₂, ... are sequentially selected by using the shift register 44 consisting of the D-flipflops 44A to 44G. With the use of the shift register 44 consisting of the D-flipflops 44A to 44G, signals are not outputted simultaneously from the D-flipflops 44A to 44G during the transition period. Thus, malfunctions such as would occur when the outside clocks φ₀, φ₁, φ₂, ... are selected sequentially with the aid of a counter may be prevented from occurring at the boundaries of the count values.

Although the outside clocks φ₀, φ₁, φ₂, ... are sequentially selected by using the shift register 44 in the above described embodiment, it is also possible to use a gray code counter to prevent the malfunction from occurring at the boundary of the count values.

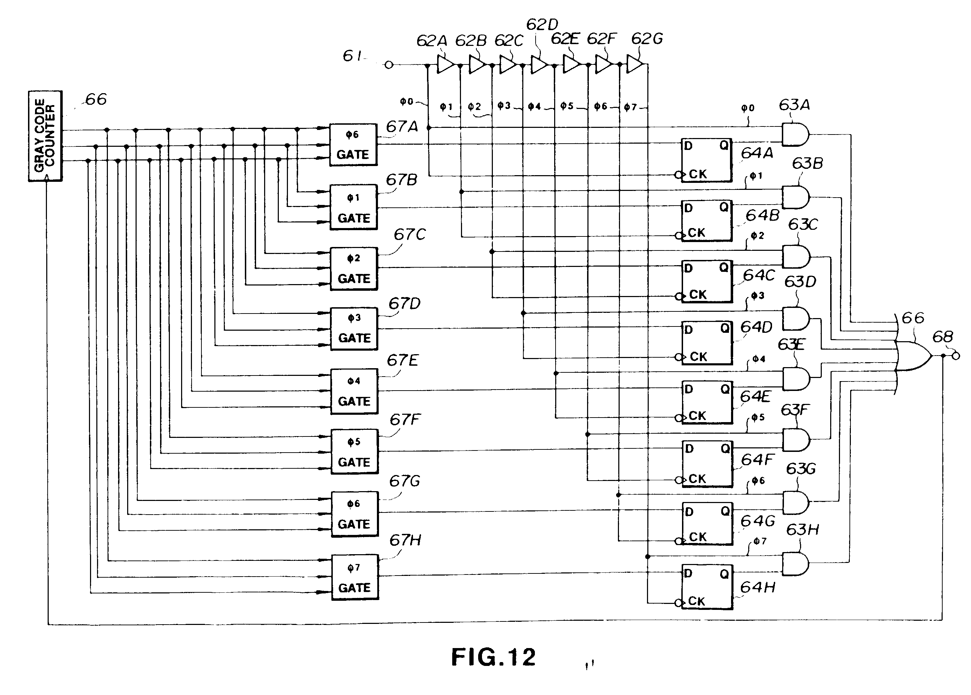

Fig. 12 shows an embodiment wherein the gray code counter is used. In this figure, the outside clocks are supplied to an input terminal 61 and, for example, eight (8) outside clocks φ₀ to φ₇ having respective different phases are taken out at the interstate points of delay circuits 62A to 62G. These outside φ₀ to φ₇ are supplied to one input terminals of AND gates 63A to 63H, while being inverted and supplied to clock input terminals CK of D-flipflops 64A to 64H.

The selected one of the outside clocks is outputted at an output terminal 66. The so-selected outside clock is outputted at an output terminal 68.

A gray code counter 66 is incremented in accordance with a gray code by clocks outputted from output terminal 68. In the gray code, it is always only one bit that is changed. For example, with the 3-bit gray code, data are changed in the following manner.
- 0: "000"
- 1: "001"
- 2: "011"
- 3: "010"
- 4: "110"
- 5: "111"
- 6: "101"
- 7: "100"

The count values of the gray code counter 65 are supplied to gate circuits 67A to 67H.

The outputs of the gate circuits 67A to 67H are "1" when the inputs are "000", "001", "011", "010", "110", "111", "101" and "100", respectively.

When the gray code counter 65 is incremented, the gate circuits 67A to 67H output "1" sequentially.

The outputs of the gate circuits 67A to 67H are supplied to data input terminals of the D-flipflops 64A to 64H.

With the falling of the eight (8) outside clocks φ₀ to φ₇ outputted with different phase from the interstate points of the delay circuits 62A to 62G, the outputs of the gate circuits 67A to 67H are fetched in the D-flipflop 64A to 64H. The outputs of the D-flipflops 64A to 64H are supplied to AND gates 63A to 63H, respectively.

The outputs of the D-flipflops 64A to 64H prove to be "1" sequentially.

The AND gates 63A to 63G are opened during the time when the outputs of the D-flipflops 64A to 64H are "1". The outside clocks φ₀ to φ₇ are sequentially outputted by means of AND gates 63A to 63H and OR gate 64.

When the outside clocks φ₀, φ₁, φ₂, ... are sequentially selected by using the gray code center 65, indefinite count values are not outputted during the transition period, since only one bit is changed at a time in the gray code. In this manner, it is possible to prevent a hazard occurring at a boundary of the count value from being erroneously fetched by the D-flipflops 64A to 64H.

Meanwhile, if the disc suffers from defects, the reproduced reference clocks are fluctuated significantly. On the other hand, if noises are mixed into the reproduced reference clocks, the reproduced reference clocks are disturbed. Therefore, phase compensation of the outside clocks with high reliability cannot be performed by only detecting the peak of the sampling values of the reproduced reference clocks only once. For phase compensation of the outside clocks with high reliability, it is necessary to perform the control operation of detecting the peak of the sampling values of the reproduced reference several times and to determine the optimum phases of the outside clocks by using the phase for the peak value obtained from several repeated control operations.

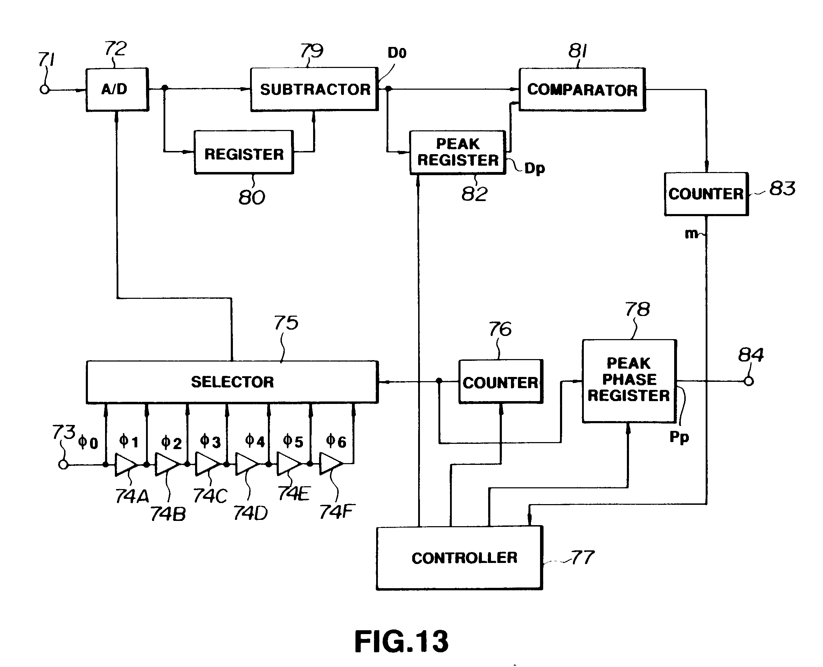

In Fig. 13, the aforementioned reference clock signals are supplied to an input terminal 71. The reproduced signals of the reference clocks from the input terminal 71 are supplied to an A/D converter 72. the outside clock selected at a selector 75 is supplied to the A/D converter 72. The reproduced signal of the reference clocks from input terminal 71 are sampled by the outside clock selected at the selector 75.

The outside clocks are supplied to an input terminal 73. The outside clocks from input terminal 73 are passed through a tandem connection of a plurality of, herein six delay circuits 74A to 74F, while the outputs from the interstate points of the delay circuits 74A to 74F are supplied to the selector 75, to which a select signal is also supplied from a counter 76. The output of selector 75 is supplied as a sampling clock to the A/D converter 72.

Outside clocks φ₀ to φ₆ having respective different phases are outputted at the interstate points of the delay circuits 74A to 74F. The value of the counter 76 is set as a function of the output from controller 77. The selecting state of the selector 75 is established by the value of the counter 76. That one of the outside clocks which has been selected at the selector is supplied from selector 75 to A/D converter 72.

The value of the counter 76 is supplied to a peak value phase register 78 which is controlled as a function of the output from controller 77. An output terminal 84 is led out from the peak value phase register 78.

The output of the A/D converter 72 is supplied to a subtraction circuit 79 directly and by means of a register 80. The subtraction circuit 79 and the register 80 are used to find a difference of the sampling values outputted from the A/D converter 72.

The output of the subtraction circuit 79 is supplied to one input of a comparator 81, and to a peak register 82, the state of which is determined by the output of the controller 77. The output of the peak register 82 is supplied to the other input terminal of the comparator 81.

The output of the comparator 81 is supplied to a counter 83, the output of which is supplied to controller 77.

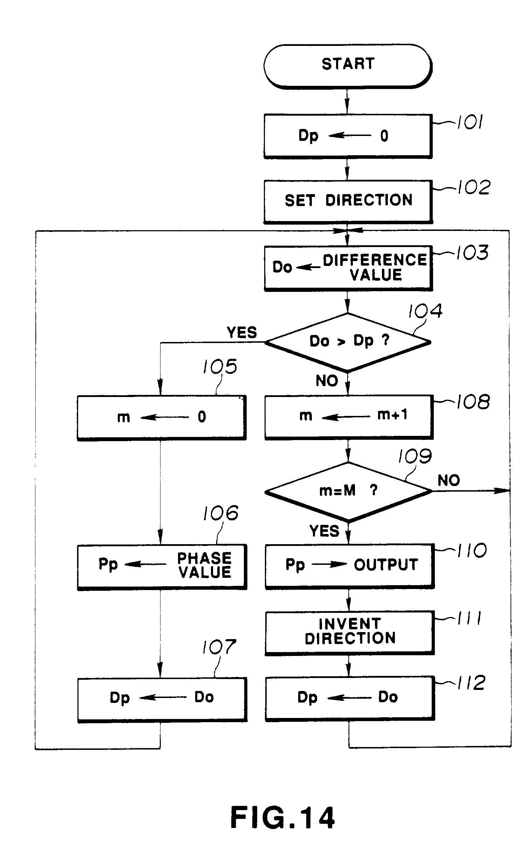

Fig. 14 is a flow chart for the present embodiment, wherein variables and constants are set in the following manner.
D₀ ... variable indicating the difference value outputted from subtraction circuit 79
Dₚ : variable indicating the phase value accumulated in peak register 82
Dₚ : variable indicating the phase value accumulated in peak value phase register 78
M : constant indicating the number of times of protection following peak value phase detection
m : variable indicating the count value of counter 83

First, the peak value Dₚ of peak register 84 is initialized to "0" at step 101.

The counting direction of the counter 76 is set at step 102 so that the counter 76 is incremented in the positive direction. "0" is first outputted from counter 76 and the outside clock φ₀ is selected at selector 75. This outside clock φ₀ is supplied to A/D converter 72 and the reproduced reference clocks are sampled by the outside clock φ₀.

In the subtraction circuit 79, the difference D₀ of the sampling value when sampling is made by the outside clocks φ₀ is found at step 103.

In the comparator 81, it is checked at step 104 if the difference D₀ is larger than the peak value Dₚ of peak register 82.

Since the peak value Dₚ of peak register 82 is initially set to "0" at step 101, the difference D₀ becomes larger than the peak value Dₚ of peak register 82. If the difference D₀ is larger than the peak value Dₚ, the count value m of counter 83 is reset to "0" at step 105.

The value of the counter 76 at this time is accumulated at step 106 in peak value phase register 78. Since the value of counter 76 is "0" at this time, the phase value Dₚ accumulated in the peak value phase register 78 is "0". The difference value D₀ at this time is stored at step 107 in peak register 82. The program then reverts to step 101.

The counter 76 is incremented to "1" and the outside clock φ₁ is selected at selector 75. This outside clock φ₁ is supplied to A/D converter 72 and the reproduced reference clock is sampled by outside clock φ₁.

In the subtraction circuit 79, the difference D₀ of the sampling values obtained by sampling with the outside clock φ₁ is found at step 103.

In the comparator 81, it is checked at step 104 if the difference value D₀ is larger than the peak value Dₚ of peak register 82.

If the peak value of the difference is not exceeded, the difference D₀ becomes larger than the peak value Dₚ of peak register 82. If the difference D₀ is larger than the peak value Dₚ, the count value m of the counter 83 is reset to "0" at step 105.

The count value at counter 76 at this time is accumulated in peak value phase register 78 at step 106. Since the value of counter 76 at this time is "1", the phase value Pₚ accumulated in peak value phase register 78 is "1".

The difference D₀ at this time is accumulated in peak register 82. The program then reverts to step 103.

The counter 76 is then incremented to "2", "3", the outside clocks φ₂, φ₃, ... are sequentially selected by selector 75 and supplied to A/D converter 72 and the reproduced reference clocks are sampled with the outside clocks φ₂, φ₃, ... .

In the subtraction circuit 79, the difference D₀ of the sampling values obtained by sampling with outside clocks φ₂, φ₃, ... is sequentially found at step 103. In the comparator 81, it is sequentially checked at step 104 if the difference D₀ is larger than the peak value Dₚ.

If the peak value of the difference is exceeded, the difference D₀ becomes smaller than the peak value Dₚ in peak register 82.

If the difference D₀ becomes smaller than the peak value Dₚ, counter 83 is incremented at step 108.

It is checked at step 109 if the count value of counter 83 reaches a predetermined number of times of protection (e.g. M=3).

If the count value at counter 83 is less than the predetermined number M, the program reverts to step 103.

The sampling value D₀ when sampling is made with the text outside clock is found at step 103 and the difference D₀ is compared to the peak value Dₚ at step 104.

If the peak value is exceeded, the difference D₀ becomes again smaller than the peak value Dₚ, so that the counter 83 is further incremented at step 108.

When the count value of counter 83 reaches the predetermined number M, the phase value Pₚ accumulated in peak value phase register 78 is outputted at output terminal 84 at step 110.

The count direction of counter 76 is inverted at step 111.

The difference D₀ at this time is accumulated at peak register 82 at step 112. The program than reverts to step 103 where the phase direction of the outside clocks is inverted to perform the control operation similar to that described above.

The above described control operation is repeated several times.

The operation of the present embodiment is hereinafter explained.

The reproduced reference clock signals from input terminal 71 are sequentially sampled by outside clocks φ₀ to φ₆ sequentially selected by selector 75. When the clocks of the maximum repetition frequency are employed as the reference clocks, the difference of the sampling values becomes maximum when the phase relation between the reference clocks and the outside clocks in optimized. Thus the outside clocks may be phase-compensated by detecting the outside clock phases at the time when the difference of the sampling values reaches the peak value.

When the phase of the outside clock is sequentially changed in one direction and the difference approaches the peak value, the current difference becomes larger than the preceding difference and, when the difference exceeds the peak value, the current difference becomes lesser than the preceding difference.

Thus the peak value of the difference may be detected if the peak value of the preceding difference is accumulated in peak register 82, the current difference is compared with the preceding peak value accumulated in peak register 82, the current difference is accumulated in peak register 82 when the current difference is larger than the preceding peak value accumulated in peak register 82, and if the difference is determined to have reached the peak value when the current difference becomes lesser than the preceding peak value accumulated in peak register 82.

However, since it occurs frequently that the second segment on the magneto-optical disc carrying the reference clock signals be defective or the noise be contained in the reproduced reference clocks, the peak value of the difference values obtained by one peak value detection control operation is poor in reliability. It is therefore necessary to repeat the above mentioned control operation of detecting the peak value of the difference several times. However, a protracted processing operation would be necessitated if the operation of detecting the peak value of the difference by sequentially changing the phase of the outside clocks in one direction were repeated several times.

Thus, when the peak value of the difference is detected, the phase of the outside clock is changed in the opposite direction to find the peak of the difference. This operation is repeated several times. When the phase of the outside clocks is changed in the opposite direction on detection of the peak value of the difference, the setup time becomes unnecessary since the phase of the outside clocks need not be shifted to a larger extent when proceeding to the peak value detection of the next following difference value. Also, since it is likely that the peak value of the next difference is of approximately the same phase as the peak value of the preceding difference, the peak value of the difference may be detected without significantly shifting the phase of the outside clocks.

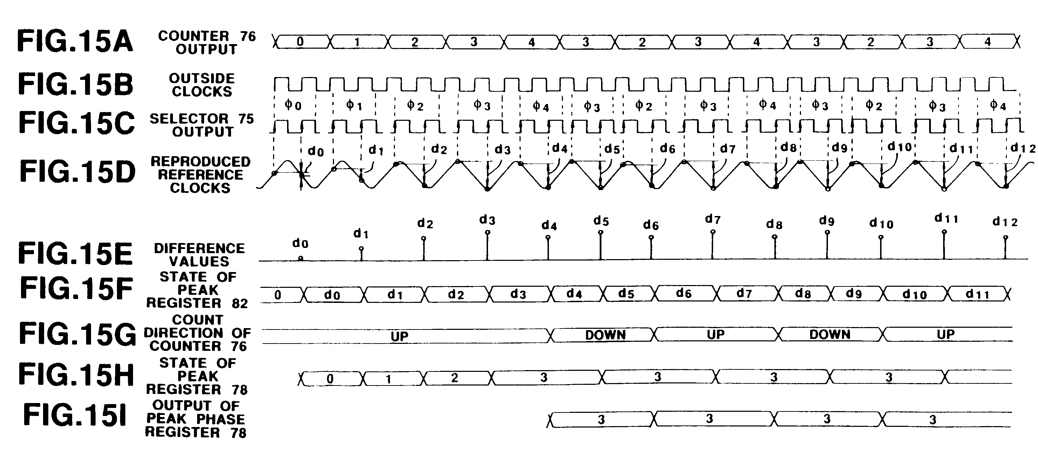

More specifically, when the counter 76 is incremented in the sequence of 0, 1, 2, 3 as shown in Fig. 15A, output clocks φ₀, φ₁, φ₂, ... are sequentially outputted from selector 75 so that the delay amounts will be progressively larger, at shown in Fig. 15C. Meanwhile, Fig. 15B shows the outside clocks supplied to input terminal 73.

The outside clocks φ₀, φ₁, φ₂, ..., selected at selector 75, are sequentially supplied to A/D converter 72. The reproduced signals of the reference clocks are sequentially sampled at A/D converter 72 with the outside clocks φ₀, φ₁, φ₂, ..., as shown in Fig. 15D. In this manner, the sampling values by the outside clocks φ₀, φ₁, φ₂, ... may be obtained sequentially.

In the subtraction circuit 79 and the register 80, the differences d₀, d₁, d₂, ... of the sampling values are found sequentially, as shown in fig. 15E.

In peak register 82, the peak value of the preceding differences is accumulated. In the comparator 81, the peak value of the preceding differences stored in peak register 82 is compared to the difference of the current sampling value.

It is noted that, if the direction of phase changes of the outside clocks is that of approaching the peak of the difference values, the difference of the current sampling value becomes larger than the peak value of the preceding differences accumulated in peak register 82. When the peak of the difference values is exceeded, the difference of the current sampling values becomes laser than the peak of the preceding difference values accumulated in peak register 82. Thus it may be detected that the peak value has now been reached.

When the difference of the current sampling values is larger than the peak of the differences, the value of the peak register 82 is updated to the difference of the current sampling values, at the same time that the value of the counter 76 at this time is accumulated in peak value phase register 78. At this time, counter 76 keeps on counting in the same direction.

Thus, in Fig. 15, the differences d₀, d₁, d₂ and d₃ of the current sampling values are larger than the peak of the preceding difference values, until the counter 76 counts "0" to "3". During this time interval, the value of the peak register 82 is sequentially updated to d₀, d₁, d₂ and d₃, as shown in Fig. 15F. Simultaneously, the values "1", "2" and "3" in the counter 76 (Fig. 15A) are sequentially accumulated in peak value phase register 78, as shown in Fig. 15H.

When the difference of the current sampling values becomes lesser than the peak of the preceding difference values, the contents of the peak value phase register 78 at this time are outputted as the peak value phase, at the same time that the counting direction of the counter 76 is inverted. The value in the peak register 82 is updated to the difference of the current sampling values.

Thus, in the example of Fig. 15, when the counter 76 (Fig. 15A) counts from "3" to "4", the difference d₄ of the current sampling value becomes lesser than the preceding difference, which is the difference d₃. At this time, the value "3" accumulated in peak value phase register 78 is outputted as peak value phase at output terminal 84, as shown in Fig. 15I, at the same time that the count direction of the counter 76 is inverted, as shown in Fig. 15G. In this manner, the phase φ₃ which will give the peak d₃ is detected and, as shown in Fig. 15F, the value of the peak register 82 is updated to the difference d₄ of the current sampling values, as shown in Fig. 15F.

The counting direction of the counter 76 is inverted to repeat the similar control operation.

Thus, in the example of Fig. 15, the counting direction of the counter 76 is inverted, and the next counter value is "3". The peak value accumulated in the peak register 82 is compared to the difference of the current sampling value. As shown in Fig. 15E, the value of peak register 82 at this time is d₄, whereas the difference of the sampling value is d₅ which is larger than the value d₄ of the peak register 82. Thus, as shown in Fig. 15F, the value of peak register 82 is updated from d₄ to d₅, at the some time that the value "3" of the counter 76 at this time is accumulated in peak value phase register 78.

The value of the counter 76 is the "2". As shown in Fig. 15F, the value in peak register 82 is d₂, which is smaller than the value d₅ in peak register 82. Thus, as shown in Fig. 15I, the value "3" accumulated at this time in peak value phase register 76 is outputted at output terminal 84 as the peak value phase, while the counting direction of the counter 76 is inverted, as shown in Fig. 15G.

The similar sequence of the control operation is repeated for sequentially outputting the peak value phase "3", "3", "3" ... detected at output terminal 84, as shown in Fig. 15I.

The example of Fig. 15 shows a case in which the disc is free of defects. The phase for the peak value detected at this time at each peak value detection control, is always φ₃, so that the peak value phase "3" is outputted at all times at output terminal 84.

If a defect is caused in the disc, the reference clock is in error. With the present embodiment, no larger error is produced in the peak value phase even when the reference clock is in error.

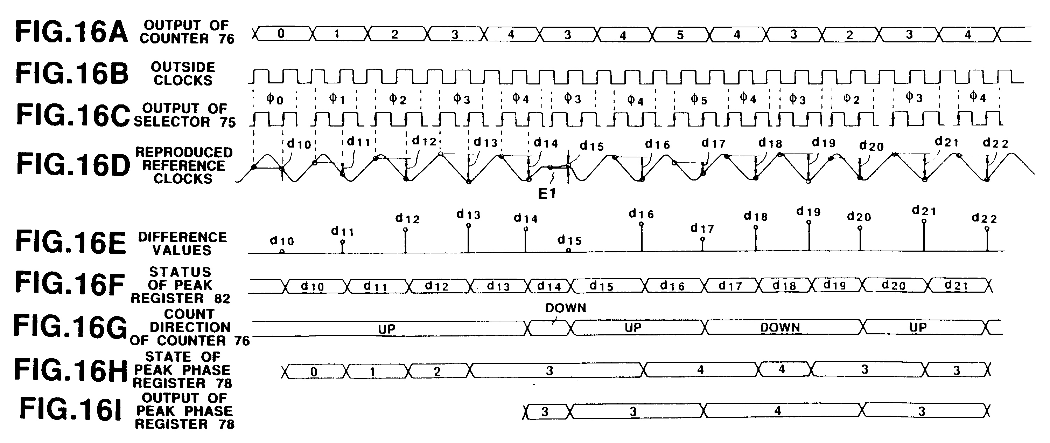

In Fig. 16D, the reference clock shown at EI is in error. If the reference clock shown at EI is in error, the difference d₁₅ is significantly reduced in magnitude, as shown in Fig. 16E. This difference d₁₅ is that obtained when sampling the reference clock with the outside clock φ₃, and should intrinsically prove to be a peak value.

Fig. 16 shows the detection of the peak of the difference for this case.

Until the values "0" to "3" are counted by the counter 76 (Fig. 16A), the differences d₁₀, d₁₁, d₁₂ and d₁₃ of the current sampling values become progressively larger. Thus, as shown in Fig. 16F, the values of the peak register 82 are sequentially updated to d₁₀, d₁₁, d₁₂ and d₁₃ and, as shown in Fig. 16H, the values "1", "2" and "3" of the counter 76 at this time are sequentially accumulated in peak value phase register 68.

When the counter 76 counts from "3" to "4" the difference d₁₄ of the current sampling values becomes smaller than the peak of the preceding difference value, which is the difference value d₁₃, so that, as shown in Fig. 16I, the value "3" accumulated in peak value phase register 78 is outputted from output terminal 84 as the peak value phase, at the same time that the counting direction of the counter 76 is inverted, as shown in Fig. 16G. The value of peak register 72 is updated to the difference d₁₄ of the current sampling values, as shown in Fig. 16F.

Since the count value of counter 96 is inverted, the next count value of counter 76 is "3". As shown in Fig. 16E, the value of the peak register 82 at this time is d₁₄, while the difference of the current sampling values is d₁₅. This difference is extremely small in magnitude, since it is in error. Thus the difference d₁₅ of the current sampling values becomes smaller than the peak d₁₄ of the preceding difference value. Thus, as shown in Fig. 16I, the value "3" accumulated in peak value phase register 78 is outputted at output terminal 84 as the peak value phase and, as shown in Fig. 16G, the counting direction of the counter 76 is inverted, while, as shown in Fig. 16F, the value of the peak register 82 is updated to the difference d₁₅ of the current sampling value.

Since the count value of counter 76 is inverted, the next count value of counter 76 is "4". The peak value accumulated in peak register 82 is compared to the difference of the current sampling values. Referring to Fig. 16E, the value of peak register 82 at this time is d₁₅, while the difference of the current sampling values is d₁₆, with the difference d₁₆ being larger than the difference d₁₅ of the peak register 82. Thus, as shown in Fig. 16F, the value of the peak register 82 is updated from d₁₅ to d₁₆, at the same time that, as shown in Fig. 16H, the value "4" of the counter 76 at this time is accumulated in peak value phase register 78.

The value of counter 76 then is "5". As shown in Fig. 16E, the value of the peak register 82 at this time is d₁₆, which is larger than the difference d₁₇ of the current sampling values. Thus, as shown in Fig. 16I, the value "4" accumulated at this time in peak value phase register 78 is outputted from the output terminal 84 as the peak value phase, at the same time that, as shown in Fig. 16G, the counting direction of the counter 76 is inverted.

The similar sequence of operation is repeated for sequentially outputting the detected peak value phases "3", "3", "4", "3" ..., as shown in Fig. 16I. These peak value phases may be averaged to produce the optimum peak value phase φ₃.

Meanwhile, it is assumed in the foregoing description that the peak value is determined to have been exceeded as soon as the difference of the current sampling values becomes smaller than the preceding peak and, based on this assumption, the phase of the outside clock for the peak value is outputted at the same time the phase changing direction for the outside clock is inverted. However, the noise plays some role and, if the peak value is deemed to be exceeded the instant the current sampling value becomes smaller than the preceding peak value, detection may fall into error. For this reason, a counter 83 is provided for counting the output of the comparator 81 and, if the difference of the current sampling value becomes smaller than the preceding peak value M times, such as three times, on end, the peak value is determined to have been exceeded, so that the phase of the outside clock of the peak value is outputted at the same time that the outside clock phase is inverted. This control sequence is implemented by steps 108 and 109 in the flow chart shown in Fig. 14.

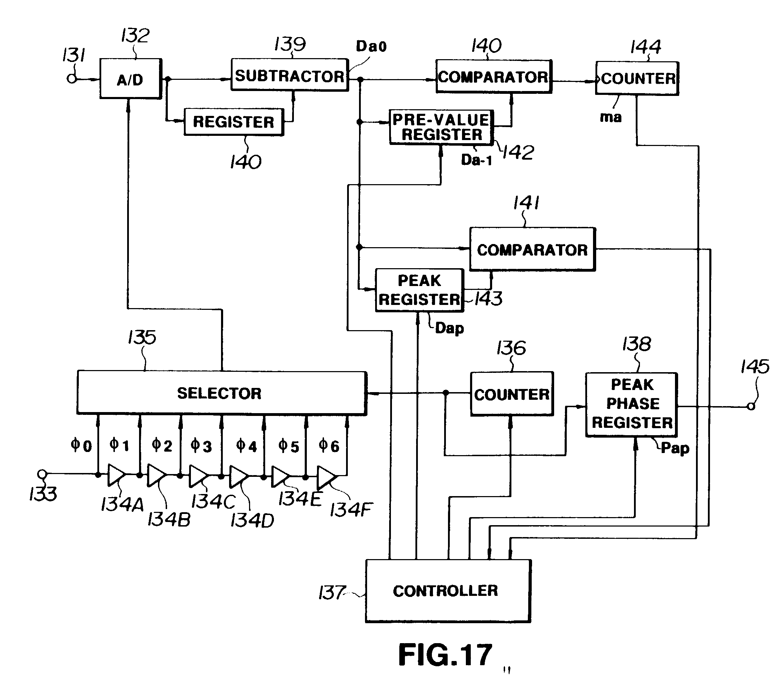

Fig. 17 illustrates a modified embodiment.

In this figure, reference clocks reproduced from the magneto-optical disc are supplied to an input terminal 131. The reproduced signals of the reference clocks from this input terminal 131 are supplied to an A/D converter 132. The outside clocks selected by selector 135 are supplied to A/D converter 133. The reproduced signals of the reference clocks from the input terminal 131 are sampled by the outside clocks selected at the selector 135.

The outside clocks are supplied to input terminal 133. The outside clocks from input terminal 133 are passed through a tandem connection of a plurality of, herein six, delay circuits 134A to 134F, and the outputs of the interstage points of the delay circuits 134A to 134F are supplied to selector 135. Select signals from a counter 136 also supplied to selector 135. The outputs of the selector 135 are supplied as sampling clocks to an A/D converter 132.

The values of the counter 136 are supplied to a peak value phase register 138 which is controlled responsive to an output from a controller 137. An output terminal 145 for the peak value phase is led out from peak value phase register 138.

The output of the A/D converter 132 is supplied to a subtraction circuit 139, while being supplied to a subtraction circuit 139 by means of a register 140. The function of the subtraction circuit 139 and the register 140 is to find the difference of the sampling value outputted from A/D converter 132.

The output of the subtraction circuit 139 is supplied to one input of a comparator 140 and to one input of another comparator 141, while being supplied to a pre-value register 142 and to a peak register 143. The output of the pre-value register 142 is supplied to the other input of comparator 140. The output of the peak register 143 is supplied to the other input of comparator 141.

The output of comparator 140 is supplied to a counter 144, the output of which is supplied to controller 137. The output of comparator 141 is supplied to controller 137.

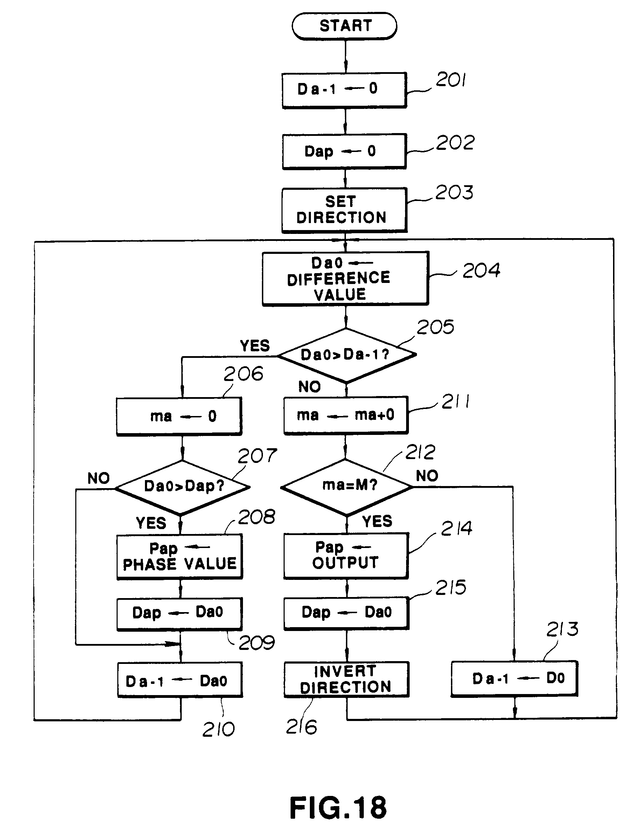

Fig. 18 is a flow chart for the present embodiment, wherein the variables or constants are set in the following manner:
Dₐ₀ ... variable indicating the difference outputted from subtraction circuit 139
D_{aP} ... variable indicating the peak value accumulated in peak register 143
Dₐ₋₁ ... variable indicating the preceding difference accumulated in pre-value register 144
P_{aP} ... variable indicating the phase value accumulated in peak value phase register 138
Ma ... constant indicating the number of times of protection following peak value phase detection mₐ ... variable indicating the count value of counter 144

The preceding difference Dₐ₋₁ in pre-value register is initialized to "0" at step 201.

The peak value D_{aP} in peak register 143 is initialized to "0" at step 202.

The counting direction of the counter 136 is set at step 203 for incrementing the counter 136 in the positive direction.

"0" is first outputted from counter 136 and the outside clock φ₀ is selected at selector 135. This outside clock φ₀ is supplied to A/D converter 132 and the reproduced reference clocks are sampled by the outside clock φ₀.

In the subtraction circuit 139, the difference Dₐ₀ of the sampling value obtained by sampling with the outside clock φ₀ is found at step 204.

In the comparator 140, it is checked at step 205 if the difference Dₐ₀ is larger than the preceding difference Dₐ₋₁ in the pre-value register 142.

Since the preceding difference Dₐ₋₁ in pre-value register 149 is set to "0" in the initialized state at step 201, the current difference Dₐ₀ becomes larger than the preceding difference Dₐ₋₁ in the pre-value register 142. If the difference dₐ₀ is larger than the preceding difference Dₐ₋₁, the count value ma in counter 144 is reset to "0" at step 206.

It is checked at step 207 if the difference Dₐ₀ is larger than the peak value D_{aP} accumulated in peak register 143.

Since the peak value D_{aP} in peak register 143 is set to "0" in the initialized state at step 202, the difference Dₐ₀ becomes larger than the peak value d_{aP}. If the difference dₐ₀ is larger than the peak value d_{aP}, the value of counter 136 is accumulated in peak value phase register 138. Since the value of counter 136 at this time is "0", the phase value d_{aP} accumulated in peak value phase register 138 is "0" at step 208.

The difference Dₐ₀ at this time is accumulated at step 209 in peak register 143.

The difference Dₐ₀ is accumulated at step 210 in the pre-value register 142.

The program then reverts to step 204.

The counter 136 is incremented to "1" and the outside clock φ₁ is selected at selector 135. This outside clock φ₁ is supplied to A/D converter 132 and the reproduced reference clocks are sampled by the outside clock φ₁.

In the subtractor 139, the difference value Dₐ₀ of the sampling values obtained by sampling with the outside clock φ₁ is found at step 204.

It the comparator 140, it is checked at step 205 if the difference Dₐ₀ is larger than the preceding difference Dₐ₋₁ in the pre-value register 142.

If the peak value of the difference is not exceeded, the difference dₐ₀ becomes larger than the preceding difference ^{D}a-1.

If the difference Dₐ₀ is larger than the preceding difference Dₐ₋₁, the count value ma of counter 144 is reset to "0" at step 206.

It is then checked at step 207 if the difference Dₐ₀ is larger than the peak value D_{aP} accumulated in peak register 143.

If the peak value of the difference is not exceeded, the difference dₐ₀ becomes larger than the peak value d_{aP}. If the difference dₐ₀ is larger than the peak value D_{aP}, the value of counter 136 is accumulated in peak value phase register 138. Since the value of counter 136 at this time is "1", the phase value P_{P} accumulated in peak value phase register 138 is "1" at step 208.

The difference Dₐ₀ at this time is accumulated in peak register 142 at step 210.

The program then reverts to step 204.

Meanwhile, if the difference dₐ₀ is larger than the peak value d_{aP} accumulated in peak register 143 at step 207, the program goes to 210 and the reference dₐ₀ is accumulated in pre-value register 142.

Subsequently, the counter 136 is incremented to "2", "3" ..., the outside clocks φ₂, φ₃ ... are sequentially selected at selector 135 so as to be supplied to A/D converter 132 and the reproduced reference clocks are sampled by the outside clocks φ₂, φ₃, .....

In the subtraction circuit 139, the difference Dₐ₀ on sampling by the outside clocks φ₂, φ₃ ... is sequentially found at step 204 and, in the comparator 140, it is checked at step 205 if the difference D₀ is larger than the preceding difference Dₐ₋₁.

If the peak value of the difference is exceeded, the difference Dₐ₀ becomes lesser than the preceding difference Dₐ₋₁.

When the difference Dₐ₀ becomes lesser than the preceding sampling value Dₐ₋₁, counter 144 is incremented at step 211.

It is then checked at step 212 if the count value of the counter 144 reaches a predetermined number of times of protection (e.g. Ma=3).

If the count value of the counter 144 is below the predetermined number of times Ma, the difference Dₐ is accumulated in pre-value register 142. The program then reverts to step 204.

The sampling value Dₐ₀ on sampling by the next outside clock is found at step 204 and the difference Dₐ₀ is compared at step 205 to the preceding difference Dₐ₋₁.

If the peak value is exceeded, the difference again becomes smaller than the preceding difference Dₐ₋₁, so that the counter 144 is incremented further in step 211.

When the count value of the counter 144 reaches the predetermined number of times of protection Mₐ, it is determined that the peak has been exceeded due to continued monotonous decrease, so that the phase value P_{aP} accumulated in peak value phase register 138 is outputted at output terminal 145 at step 214.

The difference Dₐ₀ is accumulated in peak register 143 at step 215.

The counting direction of the counter 136 is inverted at step 216.

The difference value Dₐ₀ at this time is accumulated at step 217 in pre-value register 142.

The program then reverts to step 204.

The above described sequence of operation is repeated several times.

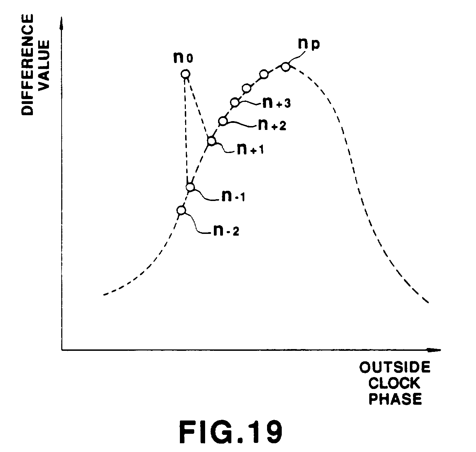

When the change of the difference of the sampling values with respect to phase changes in the outside clocks is as shown in Fig. 19, the peak of the difference should be detected at the nₚth phase. However, if the n₀th difference becomes larger due to noise, and the n₊₁th, n₊₂th and n₊₃th differences are lesser than the n₀th difference, the n₀th difference would be determined to be the peak value with the previously described control system, if the number of times of protection m is equal to 3. With the present embodiment, the state of change is not determined to be monotonous decrease when the n₊₁th difference is obtained, so that the n₀th difference is not erroneously detected to be the peak value.

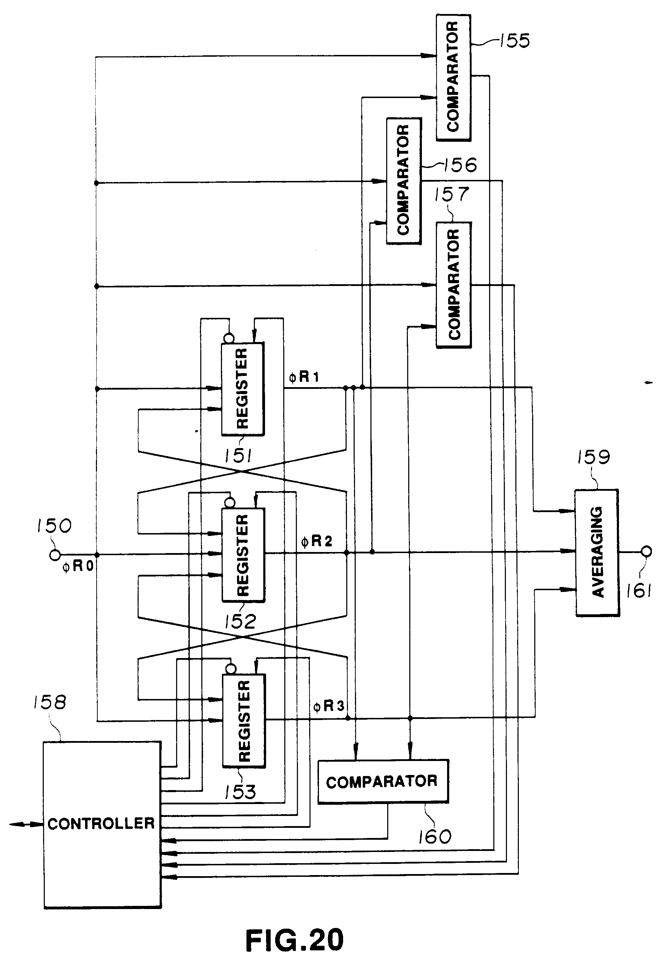

Fig. 20 shows an example of an optimum phase detection circuit for determining the optimum outside clock phase by using the peak detection phase value obtained by several repetitive control operations.

In Fig. 20, the peak detection phase value obtained by the several repeated control operations is supplied to an input terminal 150. This peak detection phase value is outputted from output terminal 94 in Fig. 13 or from output terminal 95 is Fig. 17. The peak detection phase value from input terminal 150 is supplied to registers 151, 152 and 153 and to one input terminals of comparator 155, 156 and 157.

The input/output to or from registers 151 to 153 is controlled by a controller 158. The registers 151 to 153 store the largest value, the second largest value and the smallest value, respectively. The value of register 151 may be transferred to register 152, while that of register 152 may be transferred to register 153. The value of register 153 may be transferred to register 152, while the value of register 152 may be transferred to register 151.

The output of register 151 is supplied to the other input of comparator 155 and to an averaging circuit 159. The output peak detection phase value is compared in comparator 155 to the value in register 151. The output of register 152 is supplied to a comparator 156 and to averaging circuit 159. The input peak detection phase value is compared in comparator 156 to the value in register 152. The output from register 153 is supplied to a comparator 157 and to averaging circuit 159. The input peak detection phase value is compared in comparator 157 to the value in register 153. The outputs of registers 151 and 153 are supplied to a comparator 160. It is checked in comparator 160 if the values in register 151 and 153 are lower than predetermined values.

The outputs from comparator 155, 156 and 159 are supplied to controller 158, while the output of comparator 160 is also supplied to controller 158.

The state of averaging circuit 159 is controlled by the output from controller 158. The outputs of registers 151 to 153 are averaged in averaging circuit 159 to find an optimum phase. The output from averaging circuit 159 is taken out at an output terminal 161.

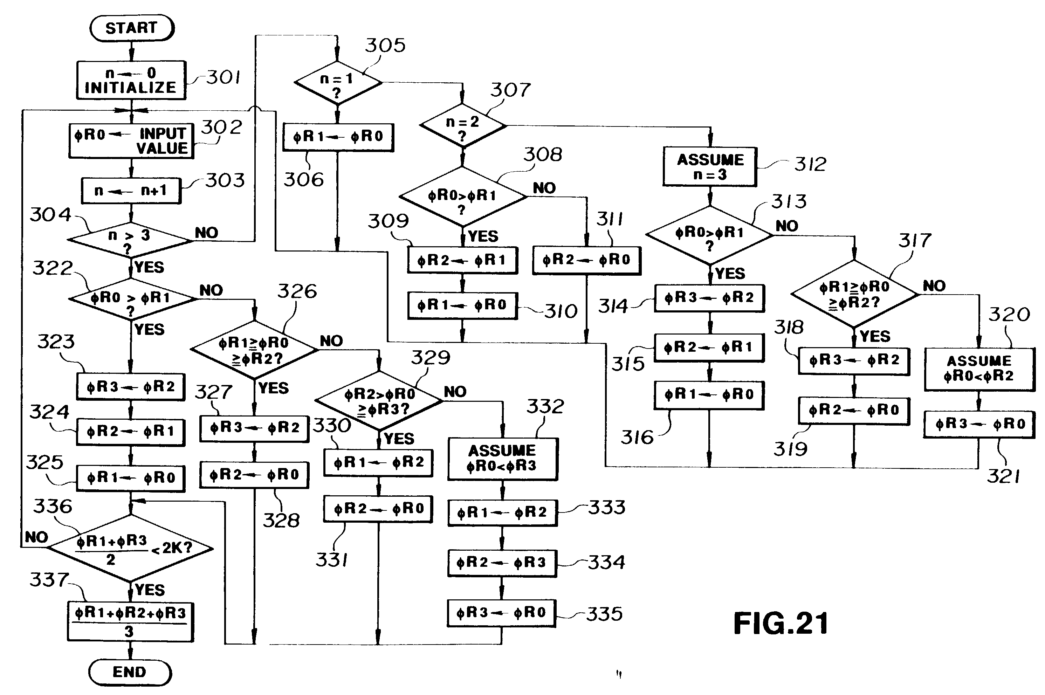

Fig. 21 is a flow chart for the above described optimum phase detection circuit, wherein the variables are defined in the following manner:
φR₀ ... peak detection phase value from input terminal 150
φR₁ ... value of register 151 accumulating the largest value
φR₂ ... value of register 151 accumulating the next largest value
φR₃ ... value of register 153 accumulating the smallest value
n ... number of times of data fetching

The number of times of data fetching n is first initialized to "0" at step 301.

The peak detection phase value φR₀ is entered from input terminal 150 at step 302.

The number of times of data fetching n is incremented at step 303.

It is checked at step 304 if the number n is not more than "3".

If the number n is not more than "3", it is checked at step 305 if the number n is "1".

If the number n is "1", the input peak detection phase value φR₀ is set at step 306 as the value φR₁ for register 151. The program then reverts to step 302.

If the number n is not "1", it is checked at step 307 if the number n is "2".

If the number n is "2", the input peak detection phase value φR₀ is compared at step 308 to the value φR₁ in register 151.

If the input peak detection phase value φR₀ is found at step 308 to be larger than the value φR₁ in register 151, the value φR₁ in register 151 is set at step 309 as the value φR₂ in register 152, while the input peak detection phase value φR₀ is set at step 310 as the value φR₁ in register 152, before the program reverts to step 302.

If the input peak detection phase value φR₀ is found at step 308 to be smaller than the value φR₁ in register 151, the input peak detection phase value φR₀ is set at step 311 as the value φR₂ in register 152, before the program reverts to step 302.

If the number n is not "2" at step 307, the number n is determined to be "3" at step 312. If the number n is "3", the input peak detection phase value φR₀ is compared at step 313 to the value φR₁ in register 151.

If the input peak detection phase value φR₀ is larger than the value φR₁ in register 151, the value φR₂ in register 152 is set at step 314 as the value φR₃ in register 153, the value φR₁ in register 151 is set at step 315 as the value R₂ in register and the input peak detection phase value φR₀ is set at step 316 as the value φR₁ in register 151, before the program reverts to step 302.

If the input peak detection phase value φR₀ is found at step 313 to be smaller than the value φR₁ in register 151, it is checked at step 317 if the input peak detection phase value φR₀ is intermediate between the value φR₁ in register 151 and the value φR₂ in register 152.

If the input peak detection phase value φR₀ is found at step 317 to be intermediate between the value φR₁ in register 151 and the value φR₂ in register 152, the value φR₂ in register 152 is set at step 138 as the value φR₃ in register 153, while the input peak detection phase value φR₀ is set at step 319 as the value φR₂ in register 152, before the program reverts to step 302.

If the input peak detection phase value φR₀ is not intermediate between the value φR₁ in register 151 and the value φR₂ in register 152, the input peak detection phase value φR₀ is determined at step 320 to be not larger than the value φR₂ in register 152, while the input peak detection phase value φR₀ is set at step 321 as the value φR₃ in register 153, before the program reverts to step 302.

By the above steps 301 to 321, the largest, the second largest and the smallest of the three input peak detection phase values fetched from the initialized state, are set as the values φR₁, φR₂ and φR₃, respectively, in registers 151, 152 and 153, respectively.

If the number n is "3" or more at step 304, it is checked at step 322 if the input peak detection phase value φR₀ is larger than the value φR₁ in register 151.

If the input peak detection phase value φR₀ is larger than the value φR₁ in register 151 adapted for accumulating the largest value, the current values in register 151 and 152 are sequentially shifted to the lower registers 152 and 153, while the input peak detection phase value is accumulated in register 151 adapted for accumulating the largest value, and the current value in register 153 adapted for accumulating the smallest value is eliminated. That is, if the input peak detection phase value is larger than the value φR₁ in register 151, the value φR₂ in register 152 is set at step 323 as the value φR₃ in register 153, while the value φR₁ in register 151 is set at step 324 as the value φR₂ in register 152 and the input peak detection phase value φR₀ is set at step 325 as the value φR₁ in register 151. The value φR₃ so far accumulated in register 154 is dumped. The program then goes to step 336.

If the input peak detection phase value φR₀ is found at step 322 to be smaller than the value φR₁ in register 151, it is checked at step 326 if the input peak detection phase value φR₀ is intermediate between the value φR₁ in register 151 adapted for accumulating the largest value and the value φR₂ in register 152 adapted for accumulating the second largest value.

If the input peak detection phase value φR₀ is intermediate between the value φR₁ in register 151 and the value φR₂ in register 152, the value in register 152 is shifted to register 153 and the input peak detection phase value is accumulated in register 152, while the value so far accumulated in register 153 is dumped. That is, if the input peak detection phase value φR₀ is intermediate between the value φR₁ in register 151 and the value φR₂ in register 152, the value φR₂ in register 152 is set at step 327 as the value φR₃ in register 153, while the input peak detection phase value φR₀ is set at step 328 as the value φR₂ in register 152. The value so far accumulated in register 153 is dumped. The program than goes to step 336.

If the input peak detection phase value φR₀ is not found at step 326 to be intermediate between the value φR₁ in register 151 and the value φR₂ in register 152, it is checked at step 329 if the input peak detection phase value φR₀ is intermediate between the value φR₂ in register 152 adapted for accumulating the next largest value and the value φR₃ in register 153 adapted for accumulating the smallest value.

If the input peak detection phase value φR₀ is intermediate between the value φR₂ in register 152 and the value φR₃ in register 153, the value φR₂ in register 152 is shifted to register 151 and the input peak detection phase value is accumulated in register 152, while the value so far accumulated in register 151 is dumped. That is, if the input peak detection phase value φR₀ is intermediate between the value φR₂ in register 152 and the value φR₃ in register 153, the value φR₂ in register 152 is set at step 330 as the value φR₁ in register 151, while the input peak detection phase value φR₀ is set at step 331 as the value φR₂ in register 152. The value φR₁ so far accumulated in register 151 is dumped. The program then goes to step 336.

If the input peak detection phase value φR₀ is not found at step 329 to be intermediate between the value φR₂ in register 152 and the value φR₃ in register 153, the input peak detection phase value φR₀ is determined at step 332 to be not larger than the value φR₃ in register 153 adapted for accumulating the smallest value.

If the input peak detection phase value φR₀ is not larger than the value φR₃ in register 153, the values so far accumulated in registers 152 and 153 are sequentially shifted to the higher registers 151 and 152, respectively, and the input peak detection phase value is accumulated in register 153 adapted for accumulating the smallest value, while the value so far accumulated in register 151 adapted for accumulating the largest value is dumped. That is, if the input peak detection phase value φR₀ is not larger than the value φR₃ in register 153, the value φR₂ in register 152 is set at step 333 as the value φR₁ in register 151 and the value φR₃ in register 153 is set at step 334 as the value φR₂ in register 152, while the input peak detection phase value φR₀ is set at step 335 as the value φR₃ in register 153. The value φR₁ so far accumulated in register 152 is dumped. The program then goes to step 336.

By the above steps 332 to 335, the furthest deviated one of the input peak detection phase values is eliminated, in such a manner that the largest, second largest and the smallest peak detection phase values are accumulated in registers 151, 152 and 153, respectively.

At step 336, it is checked if the difference between the value φR₁ in register 151 and the value φR₃ in register 153 is within a predetermined amount. If the difference between the value φR₁ in register 151 and the value φR₃ in register 153 is not a predetermined amount H, the program reverts to step 302. If the difference between the value φR₁ in register 151 and the value φR₃ in register 153 is within the predetermined amount, an average value of the value φR₁ in register 151, the value φR₂ in register 152 and the value φR₃ in register 153 is found at step 337.

In this manner, with the above described optimum phase detection circuit, the furthest deviated values among the peak detection phase values obtained by several repeated the control operations are eliminated and, when the difference between the largest and smallest values is within a predetermined value, the peak detection phase values are averaged, thus reducing errors in the peak detection phase values.

## Claims

1. An apparatus for generating clock signals for data reproduction, in which clocks for data reproduction are generated for reproducing data from a recording medium on which reference clock signals or signals of repetitive patterns of a predetermined period are recorded as data, comprising
outside clock signal forming means (11, 12, 44) for forming a plurality of outside clocks having respective different phases and being derived from preformed clock pits on said recording medium the frequency of the outside clocks (CKi) having twice the frequency of the reference clock signals or the signals of repetitive patterns of a predetermined period, **characterized by**
sampling means (40, 47) for sampling said reference clock signals by using the outside clock signals generated by said outside clock signal forming means (11, 12, 44) ;
maximum value detection means (51) for detecting the maximum value of the differences of sampling values from said sampling means associated with said outside clock signals; and
outside clock signal selecting means (14) for selecting and outputting the outside clock signal from said outside clock signal forming means associated with the maximum value detected by said maximum value detection means.

2. The apparatus according to claim 1, wherein said outside clock signal forming means (11, 12, 44) include clock signal reproducing means for producing clock signals by reproducing clock-reproducing pits previously formed on other than the recording area of said recording medium for generating clock signals.

3. The apparatus according to claim 2, wherein said outside clock forming means (11, 12, 44) output a sole type of clock signals from said clock signal reproducing means with sequential delay for forming the outside clock signals having respective different phases.

4. The apparatus according to anyone of claims 1 to 3, wherein said outside clock signal forming means include
a counter (15); and
a selector (14) controlled by the output of said counter (15) for sequentially selecting the outside clocks of the different phases for supplying the selected outside clocks to said sampling means (16).

5. The apparatus according to anyone of claims 1 to 3, wherein said outside clock signal forming means include
a shift register (44); and
a selector (43) controlled by the output of said shift register (44) for sequentially selecting the outside clocks of the different phase for supplying the selected outside clocks to said sampling means (47).

6. The apparatus according to anyone of claims 1 to 3, wherein said outside clock signal forming means include
a gray code counter (76), and
a selector (75) controlled by the output of said gray code counter (76) for sequentially selecting the outside clocks of the different phase for supplying the selected outside clocks to said sampling means (72).

7. The apparatus according to anyone of claims 1 to 6, wherein the operation of detecting the maximum value by said maximum value detecting means is repeated a number of times.

8. An apparatus for reproducing data from a recording medium comprising an apparatus for generating clock signals according to any one of the preceding claims **characterized by**
processing means (18) for calculating the difference between a sampling signal outputted from said sampling means and a sampling signal adjacent thereto; and
data reproducing means (20, 24) for comparing the output signal from said processing means employing the outside clock signal selected by said outside clock signal selection means and a value about equal to one half of the maximum value detected by said maximum value detection means, for thereby reproducing the data.

9. An apparatus for reproducing data from a recording medium according to claim 8, furthermore comprising
maximum noise detection means for detecting the maximum amplitude value of said constant level reference signal;
addition means for adding the maximum value from said maximum value detection means and the maximum amplitude from said maximum noise detection means; and
data reproducing means for comparing the output signal from said processing means employing the outside clock signals selected by said outside clock signal selection means and a one-half value of the output from said addition means, for thereby reproducing the data.

10. A method for reproducing data in which reproduced signals of reference clock signals recorded as data on a recording medium are used for phase compensation of outside clocks derived from preformed clock pits on said recording medium, whereby the frequency of the outside clocks is twice the frequency of the reference clock signals comprising the steps of
advancing the phase of said outside clock signals sequentially in one direction; sequentially sampling said reference clock signals with the outside clocks of the respecitve phases;
finding a difference value of a sampling value and an adjacent sampling value; sequentially comparing the current difference value and the preceding difference value or the peak value of a number of the preceding difference values to each other to detect a first peak value of the difference values;
outputting the outside clock of the phase associated with said first peak value; sequentially advancing the phase of said outside clocks in the opposite direction to find a second peak value of the difference values;
outputting the outside clock of the phase associated with the peak of said second difference value, while sequentially advancing the phase of said outside clocks in the opposite direction;
repeating the above step a number of times to produce the outside clocks; and reproducing the data by using said outside clocks.

## Patentansprüche

1. Einrichtung zur Erzeugung von Taktsignalen für eine Datenwiedergabe, in der Taktsignale für eine Datenwiedergabe zum Wiedergeben von Daten von einem Aufzeichnungsmedium erzeugt werden, auf welchem Referenz-Taktsignale oder Signale mit sich wiederholenden Mustern bei einer vorbestimmten Periode als Daten aufgezeichnet sind, welche Einrichtung umfaßt:
Außentaktsignal-Bildungsmittel (11, 12, 44) zum Bilden einer Vielzahl von Außentaktsignalen, die jeweilige un-terschiedliche Phasen haben und von zuvor gebildeten Taktsignal-Pits auf dem Aufzeichnungsmedium abgeleitet werden, wobei die Frequenz der Außentaktsignale (CKi) das Zweifache der Frequenz der Referenz-Taktsignale oder der Signale mit sich wiederholenden Mustern einer vorbestimmten Periode beträgt,
**gekennzeichnet** durch
ein Abtastmittel (40, 47) zum Abtasten der Referenz-Taktsignale unter Benutzung der Außentaktsignale, welche durch die Außentaktsignal-Bildungsmittel (11, 12, 44) erzeugt werden,
ein Maximalwert-Erfassungsmittel (51) zum Erfassen des Maximalwerts der Differenzen der Abtastwerte aus dem Abtastmittel, die den Außentaktsignalen zugeordnet sind, und
ein Außentaktsignal-Auswahlmittel (14) zum Auswählen und Ausgeben des Außentaktsignals aus dem Außentaktsignal-Bildungsmittel, das dem Maximalwert zugeordnet ist, welcher durch das Maximalwert-Erfassungsmittel erfaßt ist.

2. Einrichtung nach Anspruch 1, bei der die Außentaktsignal-Bildungsmittel (11, 12, 44) ein Taktsignal-Wiedergabemittel enthalten zum Erzeugen von Taktsignalen durch Wiedergeben von Information aus den Taktsignal-Wiedergabe-Pits, die zuvor in einem Bereich auf dem Aufzeichnungsmedium ausgebildet sind, welcher nicht der Aufzeichnungsbereich auf dem Aufzeichungsmedium zum Erzeugen von Taktsignalen ist.

3. Einrichtung nach Anspruch 2, bei der die Außentaktsignal-Bildungsmittel (11, 12, 44) eine einzige Art von Taktsignalen aus dem Taktsignal-Wiedergabemittel mit einer sequentiellen Verzögerung zum Bilden der Außentaktsignale ausgeben, welche jeweilige unterschiedliche Phasen haben.

4. Einrichtung nach einem der Ansprüche 1 bis 3, bei der die Außentaktsignal-Bildungsmittel enthalten:
einen Zähler (15) und
eine Auswahleinrichtung (14), die mittels des Ausgangssignals des Zählers (15) zum sequentiellen Auswählen der Außentaktsignale der unterschiedlichen Phasen zum Liefern der ausgewählten Außentaksignale an das Abtastmittel (16) gesteuert wird.

5. Einrichtung nach einem der Ansprüche 1 bis 3, bei der die Außentaktsignal-Bildungsmittel enthalten:
ein Schieberegister (44) und eine Auswahleinrichtung (43), die mittels des Ausgangssignals des Schieberegisters (44) zum sequentiellen Auswählen der Außentaktsignale der unterschiedlichen Phasen zum Liefern der ausgewählten Außentaksignale an das Abtastmittel (47) gesteuert wird.

6. Einrichtung nach einem der Ansprüche 1 bis 3, bei der die Außentaktsignal-Bildungsmittel enthalten:
einen Graycode-Zähler (76), und
eine Auswahleinrichtung (43), die mittels des Ausgangssignals des Graycode-Zähler (76) zum sequentiellen
Auswählen der Außentaktsignale der unterscniedlichen Phasen zum Liefern der ausgewählten Außentaksignale an das Abtastmittel (72) gesteuert wird.

7. Einrichtung nach einem der Ansprüche 1 bis 6, bei der der Betrieb zum Erfassen des Maximalwerts durch das Maximalwert-Erfassungsmittel eine Anzahl von Malen wiederholt wird.

8. Einrichtung zum Wiedergeben von Daten von einem Aufzeichnungsmedium mit einer Einrichtung zum Erzeugen von Taktsignalen nach einem der vorhergehenden Ansprüche,
**gekennzeichnet** durch
ein Verarbeitungsmittel (18) zum Berechnen der Differenz zwischen einem Abtastsignal, das von dem Abtastmittel ausgegeben ist, und einem Abtastsignal, das diesem benachbart ist, und
Datenwiedergabemittel (20, 24) zum Vergleichen des Ausgangssignals aus dem Verarbeitungsmittel, welches das Außentaktsignal benutzt, das durch das Außentaktsignal- Auswahlmittel ausgewählt ist, und eines Werts, der ungefähr gleich einer Hälfte des Maximalwerts ist, der durch das Maximalwert-Erfassungsmittel erfaßt ist, um dadurch die Daten wiederzugeben.

9. Einrichtung zum Wiedergeben von Daten von einem Aufzeichnungsmedium nach Anspruch 8, die außerdem umfaßt:
ein Maximalstörsignal-Erfassungsmittel zum Erfassen des Maximalamplitudenwerts des Referenzsignals mit konstantem Pegel,
ein Addiermittel zum Addieren des Maximalwerts aus dem Maximalwert-Erfassungsmittel und der Maximalamplitude aus dem Maximalstörsignal-Erfassungsmittel und
ein Datenwiedergabemittel zum Vergleichen des Ausgangssignals aus dem Verarbeitungsmittel, welches das Außentaktsignal benutzt, das durch das Außentaktsignal-Auswahlmittel ausgewählt ist, und eines halben Werts des Ausgangssignals aus dem Addiermittel, um dadurch die Daten wiederzugeben.

10. Verfahren zum Wiedergeben von Daten, bei dem wiedergegebene Signale aus Referenz-Taktsignalen, die als Daten auf einem Aufzeichnungsmedium aufgezeichnet sind, zur Phasenkompensation von Außentaktsignalen benutzt werden, die von zuvor gebildeten Takt-Pits auf dem Aufzeichnungsmedium abgeleitet werden, wodurch die Frequenz der Außentaktsignale das Zweifache der Frequenz der Referenz-Taktsignale ist, welches Verfahren Schritt umfaßt zum
Vorverschieben der Phase der Außentaktsignale sequentiell in einer Richtung,
sequentiellen Abtasten der Referenz-Taktsignale mit den Außentaktsignale der betreffenden Phasen,
Auffinden eines Differenzwerts eines Abtastwerts und eines benachbarten Abtastwerts,
sequentiellen Vergleichen des augenblicklichen Differenzwerts und des vorhergehenden Differenzwerts oder des Spitzenwerts einer Anzahl der vorhergehenden Differenzwerte miteinander, um einen ersten Spitzenwert der Differenzwerte zu erfassen,
Ausgeben des Außentaktsignals der Phase, welche dem ersten Spitzenwert zugeordnet ist,
sequentiellen Vorverschieben der Phase der Außentaktsignale in der entgegengesetzten Richtung, um einen zweiten Spitzenwert der Differenzwerte aufzufinden,
Ausgeben des Außentaktsignals der Phase, die dem Spitzenwert des zweiten Differenzwerts zugeordnet ist, während die Phase der Außentaktsignale sequentiell in der entgegengesetzten Richtung vorverschoben wird,
Wiederholen des vorstehenden Schritts eine Anzahl von Malen, um die Außentaktsignale zu erzeugen, und
Wiedergeben der Daten unter Benutzung der Außentaktsignale.

## Revendications

1. Un dispositif pour générer des signaux d'horloge pour la reproduction de données, dans lequel des signaux d'horloge pour la reproduction de données sont générés dans le but de reproduire des données à partir d'un support d'enregistrement sur lequel des signaux d'horloge de référence, ou des signaux de configurations répétitives d'une période prédéterminée, sont enregistrés comme des données, comprenant
des moyens de formation de signaux d'horloge extérieurs(11, 12, 44) pour former un ensemble de signaux d'horloge extérieurs ayant différentes phases respectives et qui sont élaborés à partir de cavités d'horloge formées à l'avance sur le support d'enregistrement, la fréquence des signaux d'horloge extérieurs (CKi) étant égale au double de la fréquence des signaux d'horloge de référence ou des signaux de configurations répétitives d'une période prédéterminée,
**caractérisé** par
des moyens d'échantillonnage (40, 47) pour échantillonner les signaux d'horloge de référence en utilisant les signaux d'horloge extérieurs qui sont générés par les moyens de formation de signaux d'horloge extérieurs (11, 12, 44);
des moyens de détection de valeur maximale (51) pour détecter la valeur maximale des différences de valeurs d'échantillonnage provenant des moyens d'échantillonnage associés aux signaux d'horloge extérieurs; et
des moyens de sélection de signaux d'horloge extérieurs (14) pour sélectionner et fournir en sortie le signal d'horloge extérieur, provenant des moyens de formation de signaux d'horloge extérieurs, qui est associé à la valeur maximale détectée par les moyens de détection de valeur maximale.

2. Le dispositif selon la revendication 1, dans lequel les moyens de formation de signaux d'horloge extérieurs (11, 12, 44) comprennent des moyens de reproduction de signaux d'horloge qui sont destinés à produire des signaux d'horloge en reproduisant des cavités de reproduction d'horloge qui ont été formées préalablement dans une zone autre que la zone d'enregistrement du support d'enregistrement pour la reproduction de signaux d'horloge.

3. Le dispositif selon la revendication 2, dans lequel les moyens de formation de signaux d'horloge extérieurs (11, 12, 14) émettent un seul type de signaux d'horloge à partir des moyens de reproduction de signaux d'horloge, avec un retard séquentiel, pour former les signaux d'horloge extérieurs ayant différentes phases respectives.

4. Le dispositif selon l'une quelconque des revendications 1 à 3, dans lequel les moyens de formation de signaux d'horloge extérieurs comprennent
un compteur (15); et
un sélecteur (14) commandé par le signal de sortie du compteur (15) pour sélectionner séquentiellement les signaux d'horloge extérieurs des différentes phases, pour appliquer aux moyens d'échantillonnage (16) les signaux d'horloge extérieurs sélectionnés.

5. Le dispositif selon l'une quelconque des revendications 1 à 3, dans lequel les moyens de formation de signaux d'horloge extérieurs comprennent
un registre à décalage (44); et
un sélecteur (43) commandé par le signal de sortie du registre à décalage (44) pour sélectionner séquentiellement les signaux d'horloge extérieurs des différentes phases, pour appliquer aux moyens d'échantillonnage (47) les signaux d'horloge extérieurs sélectionnés.

6. Le dispositif selon l'une quelconque des revendications 1 à 3, dans lequel les moyens de formation de signaux d'horloge extérieurs comprennent
un compteur en code Gray (76), et
un sélecteur (75) commandé par le signal de sortie du compteur en code Gray (76) pour sélectionner séquentiellement les signaux d'horloge extérieurs des différentes phases, pour appliquer aux moyens d'échantillonnage (72) les signaux d'horloge sélectionnés.

7. Le dispositif selon l'une quelconque des revendications 1 à 6, dans lequel l'opération de détection de la valeur maximale par les moyens de détection de valeur maximale est répétée un certain nombre de fois.

8. Un dispositif pour reproduire des données à partir d'un support d'enregistrement, comprenant un dispositif pour générer des signaux d'horloge selon l'une quelconque des revendications précédentes,
**caracterisé par**
des moyens de traitement (18) pour calculer la différence entre un signal d'échantillonnage émis par les moyens d'échantillonnage et un signal d'échantillonnage qui lui est adjacent; et
des moyens de reproduction de données (20, 24) pour comparer le signal de sortie des moyens de traitement employant le signal d'horloge extérieur qui est sélectionné par les moyens de sélection de signaux d'horloge extérieurs, et une valeur approximativement égale à la moitié de la valeur maximale détectée par les moyens de détection de valeur maximale, pour reproduire ainsi les données.

9. Un dispositif pour reproduire des données à partir d'un support d'enregistrement selon la revendication 8, comprenant en outre
des moyens de détection de bruit maximal pour détecter la valeur d'amplitude maximale du signal de référence de niveau constant;
des moyens d'addition pour additionner la valeur maximale provenant des moyens de détection de valeur maximale et l'amplitude maximale provenant des moyens de détection de bruit maximal; et
des moyens de reproduction de données pour comparer le signal de sortie des moyens de traitement employant les signaux d'horloge extérieurs qui sont sélectionnés par les moyens de sélection de signaux d'horloge extérieurs, et la moitié de la valeur du signal de sortie des moyens d'addition, pour reproduire ainsi les données.

10. Un procédé pour reproduire des données, dans lequel des signaux reproduits correspondant à des signaux d'horloge de référence enregistrés sous la forme de données sur un support d'enregistrement, sont utilisés pour la compensation de phase de signaux d'horloge extérieurs qui sont obtenus à partir de cavités d'horloge formées à l'avance dans le support d'enregistrement, la fréquence des signaux d'horloge extérieurs étant égale au double de la fréquence des signaux d'horloge de référence, comprenant les étapes suivantes :
on avance séquentiellement la phase des signaux d'horloge extérieurs dans une direction;
on échantillonne séquentiellement les signaux d'horloge de référence avec les signaux d'horloge extérieurs des phases respectives;
on détermine une valeur de différence entre une valeur d'échantillonnage et une valeur d'échantillonnage adjacente;
on compare séquentiellement entre elles la valeur de différence courante et la valeur de différence précédente ou la valeur maximale parmi un certain nombre des valeurs de différence précédentes, pour déterminer une première valeur maximale des valeurs de différence;
on émet le signal d'horloge extérieur ayant la phase qui est associée à la première valeur maximale;
on avance séquentiellement la phase des signaux d'horloge extérieurs dans la direction opposée, pour trouver une seconde valeur maximale des valeurs de différence;
on émet le signal d'horloge extérieur ayant la phase associée à la valeur maximale de la seconde valeur de différence, tout en avançant séquentiellement la phase des signaux d'horloge extérieurs dans la direction opposée;
on répète un certain nombre de fois l'étape ci-dessus pour produire les signaux d'horloge extérieurs; et
on reproduit les données en utilisant les signaux d'horloge extérieurs.
